(19) Europäisches Patentamt
European Patent Office
Office européen des brevets

(11) **EP 1 228 386 B1**

(12) **FASCICULE DE BREVET EUROPEEN**

(45) Date de publication et mention
de la délivrance du brevet:
**06.03.2013 Bulletin 2013/10**

(21) Numéro de dépôt: **01969055.1**

(22) Date de dépôt: **11.04.2001**

(51) Int Cl.:
***G01V 1/38*** *(2006.01)*

(86) Numéro de dépôt international:
**PCT/FR2001/001105**

(87) Numéro de publication internationale:
**WO 2001/079890 (25.10.2001 Gazette 2001/43)**

(54) **METHODE DE SIMULATION DE POSITIONNEMENT DE STREAMER, ET D'AIDE A LA NAVIGATION**

METHODE ZUR SIMULATION DER POSITIONIERUNG EINES SCHLEPPKABELS UND EINER NAVIGATIONSHILFE

METHOD FOR SIMULATING STREAMER POSITIONING, AND FOR NAVIGATION AID

(84) Etats contractants désignés:
**AT BE CH CY DE DK ES FI FR GB GR IE IT LI LU MC NL PT SE TR**

(30) Priorité: **13.04.2000 FR 0004760**

(43) Date de publication de la demande:
**07.08.2002 Bulletin 2002/32**

(73) Titulaire: **CGGVeritas Services SA**
**91300 Massy (FR)**

(72) Inventeur: **BRUNET, Philippe**
**F-92160 Antony (FR)**

(74) Mandataire: **Regimbeau**
**20, rue de Chazelles**
**75847 Paris Cedex 17 (FR)**

(56) Documents cités:
**GB-A- 2 342 081     US-A- 3 953 827**

• **YAN SISONG ET AL: "Dynamic performance of towing system - simulation and model experiment" PROCEEDINGS OF THE 1996 MTS/ IEEE OCEANS CONFERENCE. PART 1 (OF 3); FORT LAUDERDALE, FL, USA SEP 23-26 1996, vol. 1, 1996, pages 216-230, XP002156013 Oceans Conf Rec IEEE;Oceans Conference Record (IEEE) 1996 IEEE, Piscataway, NJ, USA**

**Description**

L'invention concerne de manière générale les opérations d'acquisition en mer de données géophysiques, menées à l'aide d'un navire remorquant un ou plusieurs câbles associés à des hydrophones.

Plus précisément, l'invention concerne une méthode permettant de prédire de manière efficace la déformée de ces câbles remorqués par un navire, et d'exploiter une telle prévision.

La géophysique a pour but la description de la structure du sous-sol. La technique la plus largement utilisée est la sismique réflexion. En sismique marine, le principe est d'émettre une impulsion sonore de forte puissance en direction du sous-sol ; l'onde acoustique ainsi créée se réfléchit partiellement aux interfaces des couches géologiques successives qu'elle rencontre, et remonte vers la surface, où des hydrophones transforment le signal acoustique en signal électrique.

L'enregistrement puis le traitement de ces signaux permet, connaissant la célérité du son à travers les différents milieux qui constituent les couches du sous-sol, d'établir une description tridimensionnelle de ce sous-sol. Cette description est d'autant plus précise que les récepteurs sont rapprochés. De plus, une partie du traitement utilise la redondance des signaux reçus par les différents hydrophones.

En sismique marine, la source acoustique est généralement constituée de canons à air, et les hydrophones regroupés en « traces » sont intégrés dans des câbles, (appelés « streamers » selon la terminologie anglo-saxonne répandue), remorqués par le navire.

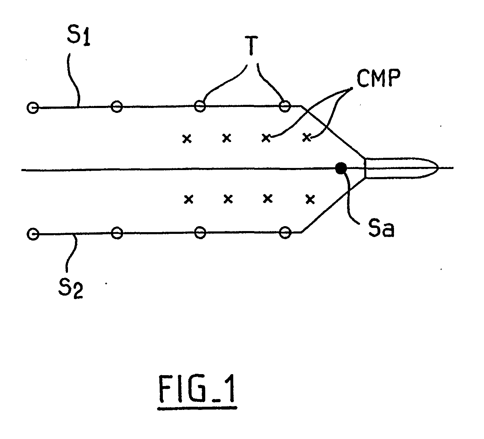

Le nombre de sources sonores et de streamers, ainsi que la longueur de ces derniers, est variable. La distance entre deux traces consécutives varie selon la résolution demandée de 12,5 à 25 m. Une configuration simple à deux streamers S1, S2, une source acoustique Sa et une pluralité de traces T est représentée sur la figure 1.

Cette figure fait également apparaître les « points milieux » CMP (selon la terminologie anglo-saxonne répandue « Common Mid Point »), qui correspondent pour chaque couple (source, trace) au point de réflexion subsurface).

En pratique, l'interaction des courants marins avec les streamers immergés entraîne des déformations géométriques du système formé par ces streamers et l'ensemble des éléments remorqués, ce qui compromet l'homogénéité de la couverture de la zone dont on désire caractériser le sous-sol. Ces déformations, variables avec le temps, entraînent des « trous de couverture » qu'il est nécessaire de combler par des passages supplémentaires du bateau (ou « infills » d'après la terminologie anglo-saxonne répandue).

Ceci constitue un inconvénient important car ces passages supplémentaires rallongent la durée des opérations, et provoquent des augmentations de coût très significatives (pouvant être de l'ordre de 20%).

En outre les délais et les surcoûts associés au traitement des infills peuvent être très variables d'une opération à l'autre, et il est donc impossible de les prévoir avec précision, ce qui empêche les opérateurs d'effectuer des prévisions précises concernant la durée et le coût d'une opération que l'on projette ; ceci constitue un inconvénient supplémentaire pour les opérateurs.

On comprend donc qu'il existe des besoins manifestes de réduction des infills en opération, ainsi que de prévision de leur importance pour une opération d'acquisition de données que l'on projette. Et pour satisfaire ces besoins, il est nécessaire de caractériser l'influence du courant sur la déformation des streamers.

A cet égard, il existe des tentatives pour modéliser la déformation d'un streamer remorqué par un navire et soumis à un courant. On pourra par exemple se référer à l'article « The shape of a marine streamer in a cross current » de P.M. Krail et H. Brysk, paru dans le journal de la Society of Exploitation Geophysicists vol. 54 n°3.

Mais de telles tentatives ne reproduisent pas les conditions réelles de courant (l'article mentionné faisant en particulier l'hypothèse d'un courant stationnaire et de trajectoire rectiligne uniforme du navire) de sorte que leurs résultats ne sont pas directement exploitables, et les inconvénients ci-dessus demeurent.

Le but de l'invention est de permettre de réduire ces inconvénients.

Afin d'atteindre ce but, l'invention propose tout d'abord une méthode de simulation de positionnement de streamer remorqué par un navire lors d'une opération d'acquisition en mer de données géophysiques selon la revendication 1.

Des aspects préférés, mais non limitatifs de la méthode de simulation du positionnement de streamer selon l'invention sont les suivants :

- ladite détermination comprend :

  - la réception de valeurs primaires de courant, mesurées et/ou prédites,
  - la définition de champs de vecteurs ou 'objets courant' de types respectifs correspondant à différentes représentations du courant, et construits à partir desdites valeurs primaires du courant,
  - le choix d'un 'objet courant' en fonction de l'application visée.

- le choix de l''objet courant' prend en compte la proximité dans le temps de l'instant pour lequel la prédiction est effectuée avec l'instant auquel la prédiction est réalisée.

- le choix de l''objet courant' prend en compte une corrélation entre des prédictions antérieures d''objet courant' avec des mesures de courant réalisées aux instants pour lesquels lesdites prédictions antérieures avaient été effectuées.
- les coordonnées d'au moins certains objets 'courant' comprennent des valeurs mesurées sur site.
- les coordonnées d'au moins certains 'objets courant' comprennent des valeurs extrapolées prédictives de courant.
- certains 'objets courant' sont calculés par le biais d'un filtre prédicteur permettant d'extrapoler une série de données de courant à partir de mesures de courant effectuées sur la zone d'acquisition.
- les types des 'objets courant' définis comprennent les types suivants :

  1) courant total mesuré par un courantométre,
  2) courant de marée issu de bulletins météorologiques, ou déduit de - mesures de courant par analyse harmonique,
  3) somme d'un courant de marée et d'un courant résiduel, ledit courant de marée étant issu de bulletins météorologiques ou bien déduit de mesures de courant par analyse harmonique et ledit courant résiduel étant issu de bulletins météorologiques,
  4) extrapolation du courant total mesuré par un courantométre,
  5) somme d'un courant de marée et d'un courant résiduel calculé, ledit courant de marée étant issu de bulletins météorologiques ou bien déduit de mesures de courant par analyse harmonique, et ledit courant résiduel étant obtenu par soustraction dudit courant de marée au courant mesuré sur la zone d'acquisition,
  6) historique d'extrapolations passées du courant total mesuré par un courantométre,
  7) somme d'un courant de marée et d'un historique d'extrapolations passées d'une série de valeurs constituées du courant total mesuré par un courantométre auquel on a retranché un courant de marée, ledit courant de marée étant issu de bulletins météorologiques ou bien déduit de mesures de courant par analyse harmonique.

- lors du calcul des 'objets courant' de type 4, 5, 6 ou 7, la série de données traitée est considérée comme un processus aléatoire stationnaire non centré du second ordre.
- lors du calcul des valeurs d'un 'objet courant' de type 4, 5, 6, ou 7, on attribue aux mesures de la série de données à extrapoler un poids inversement proportionnel à leur ancienneté, afin d'anticiper des changements brusques dus au courant résiduel.
- lors du calcul d'une valeur particulière d'un 'objet courant' de type 4, 5, 6 ou 7, on minimise une fonction de variance de l'écart entre la valeur prédite et la valeur exacte qu'aura le courant ou le courant résiduel à l'instant pour lequel la prédiction est calculée, ladite fonction de variance étant de la forme :

$$G = \begin{pmatrix} 1 & -1 - \sum_{i=3}^{P+1} a_i & a_3 & \cdots & a_{p+1} \end{pmatrix} \ \Gamma_{ll} \ \begin{pmatrix} 1 \\ -1 - \sum_{i=3}^{P+1} a_i \\ a_3 \\ \vdots \\ a_{p+1} \end{pmatrix}$$

- lors du calcul d'une valeur particulière d'un 'objet courant' de type 4, 5, 6 ou 7, on calcule une fonction d'auto-corrélation de la série de données de courant ou de courant résiduel, puis on établit et résout un système linéaire d'équations.
- lors du calcul d'une valeur particulière d'un 'objet courant' de type 4, 5, 6 ou 7, on effectue un conditionnement du système linéaire à résoudre en mettant en oeuvre une méthode de descente, de préférence la méthode du gradient conjugué.
- la méthode donne la possibilité de faire porter le calcul de valeurs extrapolées sur une série de valeurs de courant mesuré à laquelle on a préalablement soustrait un courant de marée, de manière à calculer un courant résiduel extrapolé, puis d'ajouter audit courant résiduel extrapolé, le courant de marée correspondant à l'instant pour lequel l'extrapolation a été effectuée.
- la méthode comprend l'estimation de la performance des différentes prédictions de courant par comparaison avec une mesure de courant réalisé au temps correspondant au temps des prédictions.
- la méthode comprend l'estimation de la performance d'un 'objet courant' issu de prédictions et/ou de mesures de courant, par comparaison entre la mesure du positionnement du streamer et la simulation du positionnement du streamer, ladite simulation prenant en compte l''objet courant' dont on souhaite estimer la performance.

- la performance de l''objet courant' est décrite par des critères qui comprennent la moyenne de la valeur absolue de l'écart entre mesure et simulation du positionnement des streamers, et/ou l'écart entre prédiction et mesure du positionnement du streamer en dessous de la valeur duquel on trouve 90% des points de prédiction.

L'invention propose également une méthode d'aide à la navigation d'un navire remorquant au moins un streamer en vue de réduire les zones de sous couverture et/ou de sur couverture générées lors d'une opération d'acquisition de données géophysiques en mer pendant laquelle le navire parcourt une pluralité de lignes s'étendant selon une direction générale définissant une abscisse et formant un réseau recouvrant une zone désirée, caractérisée en ce qu'elle met en oeuvre une méthode de simulation de positionnement de streamer selon l'un des aspects évoqués ci-dessus.

Des aspects préférés, mais non limitatifs de la méthode d'aide à la navigation selon l'invention sont les suivants :

- la méthode comprend la détermination à intervalles d'espace réguliers de l'ensemble des couples {position du navire; instant} de manière à définir une route le long de laquelle, à abscisse donnée suivant l'orientation générale des lignes du réseau, l'orientation du streamer soit aussi proche que possible de l'orientation d'un streamer associé lors d'un passage précédent du navire sur une ligne adjacente.
- la méthode comprend les étapes suivantes :

  - choix d'un 'objet courant' de type adapté,
  - définition des paramètres d'optimisation,
  - calcul du positionnement d'un 'streamer consigne' à partir des données relatives au positionnement du streamer du profil adjacent et des paramètres d'optimisation,
  - prise en compte des données de vitesse et de direction du navire et des données de positionnement du streamer au moment du lancement du calcul d'optimisation,
  - création d'une grille d'optimisation à trois dimensions, une première dimension (Y) étant parallèle à ladite direction générale une seconde direction (X) étant perpendiculaire à la direction générale, et incluse dans le plan horizontal, la troisième dimension (DT) représentant les incréments de temps possibles entre deux noeuds distants d'une cellule de grille selon la direction générale (Y),
  - simulations de l'évolution du positionnement du streamer remorqué par un navire empruntant toutes les routes définies par les noeuds de la grille d'optimisation,
  - calcul pour toutes les routes envisagées d'une norme de l'écart entre le positionnement du streamer simulé et le positionnement du streamer consigne,
  - calcul d'une route optimale pour laquelle la norme associée est minimum.

- l'étape d'optimisation comprend la minimisation d'une norme de l'écart entre le positionnement du streamer consigne et le positionnement du streamer simulé.
- ladite norme à minimiser est de la forme :

$$H(X1, \delta t1) = \sum_{j=1}^{J} \sum_{k=1}^{K} \left| X_{consigne}(k, j) - X_{prédit}(k, j) \right| f(k)$$

où:

  - X1 est une série de J valeurs consécutives de la position de la tête du streamer selon la direction horizontale de la grille d'optimisation perpendiculaire à la direction générale,
  - $\delta t1$ est une série de J valeurs consécutives de la durée que met la tête du streamer pour passer d'un noeud de la grille d'optimisation de coordonnées $(X_{i1}, X_j, \delta t_{k1})$ à un noeud de coordonnées $(X_{i2}, Y_{j+1}, \delta t_{k2})$,
  - J est le nombre de noeuds de la grille selon ladite direction générale (Y),
  - K est le nombre de points de l'abscisse curviligne du streamer discrétisé,
  - $X_{consigne}(k, j)$ est la position selon l'axe X du point k du "streamer consigne" lorsque la tête de ce dernier est au niveau du jième plan de la grille d'optimisation selon l'axe Y,
  - $X_{prédit}(k, j)$ est la position selon l'axe X du point k du streamer simulé lorsque la tête de ce dernier est au niveau du jième plan de la grille d'optimisation selon l'axe Y,
  - f(k) est une fonction de pondération affectée à l'écart entre streamer simulé et streamer consigne.

- la méthode met en oeuvre un critère d'optimisation déduit d'un écart entre des données mesurées et prédites de positionnement des streamers.
- l'étape d'optimisation de couverture de zone est réalisée en temps réel de manière à fournir au navire une série de triplets {instant; position du navire; vitesse du navire} à suivre pour optimiser la trajectoire du navire sur une ligne que le navire est en train de parcourir.

En outre, l'invention propose une application d'une méthode d'aide à la navigation telle qu'évoquée ci-dessus, pour déterminer une trajectoire et une heure de début associées à une prochaine ligne devant être parcourue par le navire, ainsi que la meilleure prochaine ligne à effectuer. Dans cette application, selon un aspect préféré, on recherche à l'intérieur d'un créneau temporel donné une heure de début de ligne correspondant à une minimisation de la sous couverture et de la sur couverture.

Enfin, l'invention propose une méthode de prévision du taux de couverture associé à une opération d'acquisition de données géophysiques que l'on projette de réaliser en mer sur une zone donnée, caractérisée en ce que la méthode met en oeuvre une simulation de route d'un navire comprenant une méthode d'aide à la navigation telle qu'évoquée ci-dessus.

D'autres aspects, buts et avantages de l'invention apparaîtront mieux à la lecture de la description suivante d'une forme préférée mais non limitative de réalisation de l'invention, faite en référence aux dessins annexés qui comprennent outre la figure 1 qui a déjà été décrite dans l'introduction de ce texte :

- les figures 2a à 2d, qui sont des représentations schématiques d'un navire remorquant des streamers en opération et des zones de couverture générées par le passage du navire,
- la figure 3, qui est une représentation de la couverture réalisée d'une zone, faisant en particulier apparaître les zones d'infills,
- la figure 4, qui est un bloc-diagramme de la structure d'un système destiné à mettre en oeuvre l'invention,
- les figures 5a à 5d qui exposent différents résultats de prévisions de courant mises en oeuvre dans l'invention,
- les figures 6 et 7 qui sont des schémas de type bloc-diagramme de processus de traitement et de prévision de courant mises en oeuvre dans l'invention,
- la figure 8, qui représente un maillage couvrant une zone à explorer et les trajectoires successives du navire dans ce maillage, ainsi que l'orientation d'un streamer remorqué par le navire,
- les figures 9 et 10, qui sont des schémas d'optimisation mis en oeuvre dans les méthodes selon l'invention,
- la figure 11, qui montre schématiquement deux paires de profils adjacents, dont l'une est optimisée pour réduire le taux d'infills,
- la figure 12, qui donne une représentation graphique d'une fonction à minimiser dans l'invention,
- la figure 13, qui est une représentation pour trois profils différents d'un critère de performance de prévision de dérivée de streamer mise en oeuvre dans une méthode d'aide à la navigation selon l'invention.

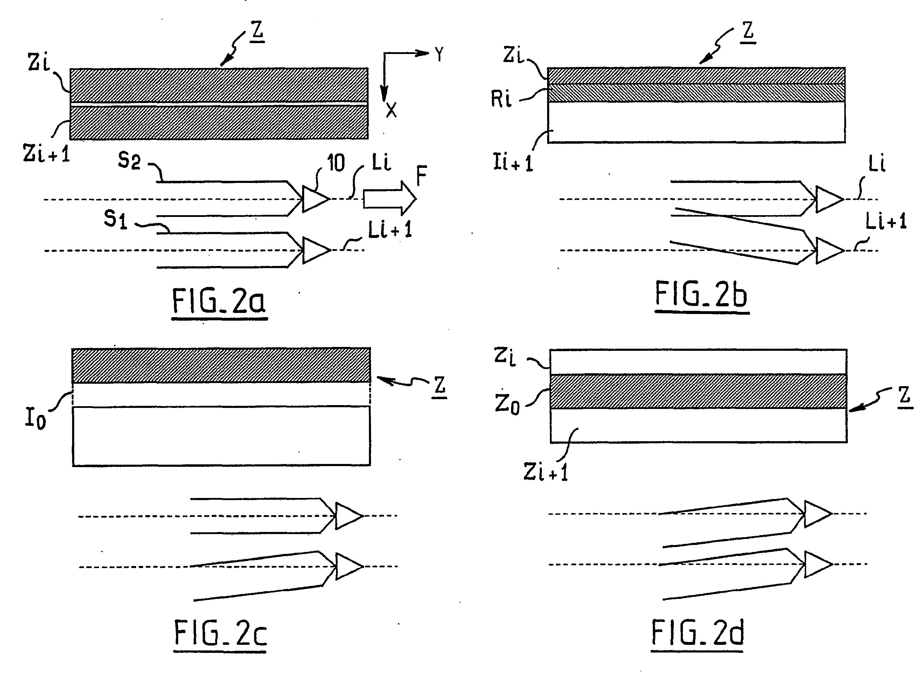

En référence maintenant à la figure 2a, on a représenté schématiquement un navire 10 se déplaçant dans le sens d'une flèche F, le long d'une trajectoire (que l'on nommera également « ligne » ou « profil ») Li. On a schématisé à l'arrière du navire deux streamers S1 et S2, chaque streamer portant des traces de capteurs géophysiques non représentées sur la figure. Ces streamers peuvent correspondre aux deux streamers situés aux extrémités latérales d'un ensemble en comportant en réalité plusieurs.

La ligne Li fait partie d'un réseau (non représenté) de lignes qui couvre une zone Z (représentée dans la partie haute de la figure) à explorer, ledit réseau constituant une « grille de bin ».

Le navire décrit ainsi un ensemble de lignes généralement parallèles les unes aux autres (toutes les lignes de la grille de bin s'étendant selon une même direction générale), la distance entre deux lignes adjacentes Li et Li+1 telles que représentées sur la figure 2a étant choisie pour obtenir une continuité de couverture désirée des mesures du streamer S2 lors du passage du navire sur la ligne Li avec les mesures du streamer S1 lors du passage suivant du même navire sur la ligne Li+1.

Cette continuité de couverture désirée est représentée dans la partie haute de la figure 2a, sur laquelle sont mises en évidence différentes zones élémentaires de la zone Z à couvrir, lesdites zones élémentaires étant couvertes par les streamers du navire 10 lorsque celui-ci a parcouru les lignes Li et Li+1.

Ainsi, lors du passage du navire le long de la ligne Li les streamers ont couvert une zone élémentaire Zi, et lors du passage du navire le long de la ligne Li+1 les streamers ont couvert une zone élémentaire Zi+1. Les deux zones élémentaires Zi et Zi+1 sont contiguës.

La figure 2a correspond à une configuration idéale dans laquelle les streamers sont orientés parallèlement à la route du navire de sorte que la couverture de la subsurface est homogène et suffisamment dense.

Sur la figure 2b, on constate que contrairement au cas de la figure 2a, les streamers du navire n'ont pas la même orientation lors des passages respectifs sur les lignes Li et Li+1, l'ensemble de streamers étant aligné avec la trajectoire du navire seulement lors du passage sur la ligne Li, alors que lors du passage ultérieur du navire sur la ligne Li+1, la partie des streamers la plus éloignée du navire est décalée transversalement vers la ligne Li. Ceci est typiquement dû à une présence de courant dans la direction transverse aux lignes Li et Li+1 lors du passage du navire sur la ligne Li+1.

On constate par conséquent dans la partie haute de la figure 2b que la zone Z n'est que partiellement couverte, une aire de recouvrement Ri ayant été générée (ce qui correspond à une sur couverture) tandis qu'une partie li+1 de la zone Z n'est pas correctement couverte lors du passage du navire sur la ligne Li+1, et correspond ainsi à une zone non couverte en l'état.

La figure 2c illustre le cas dans lequel une variation de courant entre deux passages consécutifs provoque une divergence des zones couvertes par les ensembles de streamers lors de ces deux passages, laissant entre les deux lignes Li et Li+1 une zone $I_o$ non couverte sur la subsurface (c'est-à-dire sur le fond de la zone).

On constate ainsi qu'en fonction des configurations de courant il existe de nombreuses possibilités que des zones soient mal couvertes ($I_0$, li+1). Ces zones représentent des surfaces qu'il est nécessaire de combler par des passages supplémentaires appelés infills.

Et on comprend qu'en opération, les conditions de courant provoquent souvent de telles configurations, certaines régions pouvant comporter des courants importants et/ou variables.

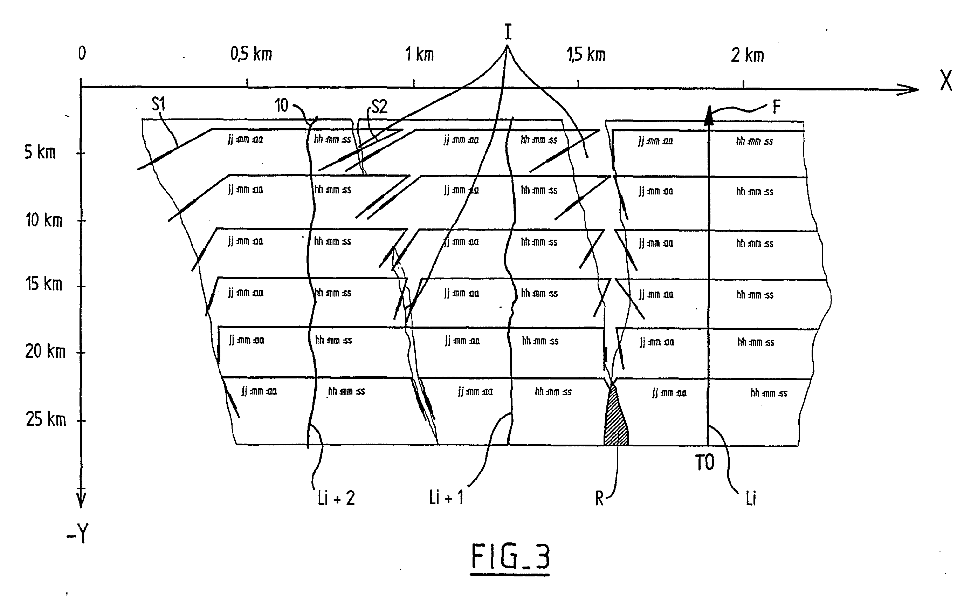

La figure 3 est ainsi une illustration des infills I provoqués lors des passages successifs par les variations d'orientation des streamers S1 et S2 remorqués par un navire 10 (représenté ici par un simple point évoluant le long de ses lignes de trajectoire successives Li, Li+1, Li+2).

Cette figure (sur laquelle le sens de déplacement du navire est rappelé par la flèche F et les échelles des axes X et Y correspondant aux deux directions horizontales sont différentes) fait également apparaître une aire R de sur couverture entre les passages Li et Li+1 adjacents.

La figure 2d illustre le cas dans lequel les streamers sont soumis au même courant transversal lors des deux passages consécutifs. La zone Z0 est couverte de façon suffisamment dense, en ce sens que cette zone a été couverte avec les traces des streamers qui sont le plus éloignées du navire, lors du premier passage, et avec les traces proches du navire lors du second passage.

Par contre, on constate l'existence d'une zone Zi insuffisamment couverte lors du premier passage, et d'une zone Zi+1 insuffisamment couverte lors du deuxième passage.

Un troisième passage pour lequel le courant serait identique à celui des deux premiers passages permettrait de couvrir correctement la zone Zi+1 en y ajoutant la couverture des traces manquantes, c'est-à-dire les traces proches.

Des passages supplémentaires successifs pour lesquels le courant serait identique (et donc les streamers parallèles) permettraient donc, selon le même principe, de couvrir la totalité de la zone d'étude, ne laissant que les deux zones marginales insuffisamment couvertes.

Le type de configuration de la figure 2d fournit par conséquent une couverture suffisante de la subsurface.

Comme on va le voir, l'invention utilise ce principe et permet de déterminer à chaque passage du navire, la route à donner au navire pour que l'orientation des streamers lors de ce passage soit la plus parallèle à l'orientation des streamers lors du passage sur le profil adjacent préalablement acquis.

De plus comme on l'a dit, un moyen de prévoir et de réduire les infills serait de caractériser de manière réaliste l'effet du courant sur la déformation des streamers.

A cet effet, on va maintenant décrire ci-dessous une méthode de prédiction d'orientation de streamer qui, selon un premier aspect de l'invention, prend en compte les variations temporelles du courant, ainsi que les variations de vitesse et de cap du navire afin de restituer au mieux la réalité des interactions physiques entre les courants et les streamers.

## PRINCIPES GENERAUX

On va tout d'abord rappeler certaines caractéristiques fondamentales des courants marins ; on sait que les courants rencontrés en mer sont en réalité la superposition de plusieurs composantes :

- les courants de marée que l'on appellera « gravitationnels » : leur origine première est l'attraction newtonienne,
- les courants que l'on appellera « radiationnels » : leur origine plus ou moins lointaine est le rayonnement solaire, responsable de phénomènes tels que le régime des vents, le cycle des saisons, les perturbations météorologiques, ou les variations spatiales de densité des océans pouvant générer des mouvement au sein des masses d'eau. Les courants radiationnels peuvent être subdivisés en :

> une composante permanente résultant de la répartition moyenne des conditions climatiques à la surface du globe,
> une composante périodique saisonnière due à l'alternance des saisons, qui peut être interprétée comme une modulation cyclique de la composante permanente évoquée ci-dessus,

➢ une composante non périodique ayant pour origine les effets météorologiques (courants météo).

Les composantes permanente et saisonnière constituent ce qu'il est convenu d'appeler les courants généraux.

Les courants de marée sont déterministes et prédictibles dans le temps. Les courants généraux sont répertoriés et également prédictibles. On trouvera par exemple dans les Pilot Charts produites par l'United States National Oceanographic and Atmopheric Adminsitration (NOAA), ainsi que dans les Instructions Nautiques éditées par le SHOM, des cartographies de ces courants.

A l'opposé, les courants engendrés par les effets météorologiques, que l'on peut résumer en première approximation aux courants dus aux vents, sont aléatoires. Il est donc avantageux de les traiter par des méthodes statistiques et on verra dans la suite de ce texte que l'invention propose une méthode originale pour prévoir ces courants et en tenir compte si cela est pertinent dans la prévision de déformée de streamer.

On sait également que les variations de ces différentes composantes du courant ne se font pas selon les mêmes échelles de temps. Et des études statistiques menées par la Demanderesse sur plusieurs zones géographiques réparties en différents endroits de la planète ont montré que suivant les zones considérées, l'importance relative des différentes composantes du courant pouvait varier sensiblement.

Par conséquent, d'une zone à l'autre les caractéristiques des variations temporelles du courant total ne sont pas les mêmes, les variations saisonnières pouvant être prédominantes dans certaines zones alors que dans d'autres zones la variabilité à court terme (due essentiellement au vent) peut être plus importante, d'autres zones encore pouvant avoir un régime de courant imposé principalement par la circulation générale et donc relativement stable, etc...

Comme cela sera décrit dans le texte qui suit, la prévision de déformée de câble mise en oeuvre dans l'invention ne se résume pas à un simple couplage entre un modèle stationnaire de courant et un modèle permettant de calculer la déformée des streamers en fonction de conditions de courant données.

Au contraire, cette prévision prend également en compte les aspects temporels liés aux variations des courants marins :

- en permettant de choisir, en fonction de la zone à couvrir (ainsi qu'éventuellement de la durée et l'éloignement dans le temps de la période d'acquisition des données géophysiques), les composantes du courant qui affectent significativement les variations temporelles du courant total,
- et en prenant en compte les variations dues à ces composants.

Le fait de tenir compte de la durée de la période d'acquisition des données est important en particulier pour les applications de l'invention à court terme et moyen terme. En effet, il est impossible de prévoir les variations du courant météo pour une période très éloignée dans le temps (c'est à dire commençant longtemps après la date à laquelle la prévision est effectuée), ou même pour une période trop longue.

C'est pourquoi, la méthode selon l'invention distingue les composantes du courant devant être prises en compte pour la prévision de déformée de streamers (en définissant comme on le verra des « types » de courants et en permettant à un utilisateur de choisir le « type » de courant adapté à ses besoins).

Et au-delà, l'invention propose également d'exploiter cette prévision de déformée pour trois horizons temporels différents :

- *en temps réel,* lors des opérations d'acquisition en mer. Le but est ici de fournir au navire une aide à la navigation afin d'ajuster en permanence la route du navire pour qu'à chaque instant l'orientation des streamers soit aussi proche que possible de leur orientation à la même hauteur (c'est à dire à même abscisse le long de la direction Y sur la figure 3), lors du passage du navire sur une ligne adjacente ayant déjà été parcourue, ceci afin de diminuer les infills en temps réel. Cette application sera plus particulièrement décrite dans le présent texte.
  Pour réaliser une telle aide à la navigation, il est nécessaire de disposer d'une prévision du courant (aux profondeurs correspondant à l'immersion des streamers) sur un horizon temporel dont l'ordre de grandeur est l'heure ; on décrira ainsi également plus loin dans ce texte les caractéristiques d'une étape de prédiction de courant mettant en oeuvre un prédicteur de courant (ou module de prévision à court terme du courant),
- *à moyen terme,* pour déterminer, toujours lors des opérations d'acquisition, la meilleure trajectoire à suivre par le navire pour réaliser la ligne suivante. Ainsi, le navire étant en train de parcourir une ligne Li, le but de la méthode à cette échelle de temps (de l'ordre de 24 heures) est de déterminer la meilleure trajectoire du navire pour parcourir la ligne adjacente Li+1 à venir, ainsi que l'heure la plus appropriée pour commencer cette ligne.
  On notera qu'il existe certes des méthodes pour réaliser une telle prévision à moyen terme. Mais l'obtention de résultats réalistes par les prévisions de courant de marée mises en oeuvre par ces méthodes nécessite de disposer de données bathymétriques précises avec une résolution spatiale élevée. Or, ce type de données, s'il est parfois disponible (par exemple données du SHOM relatives aux zones côtières françaises), fait défaut pour la plupart des zones susceptibles d'être explorées.

Et en tout état de cause, pour cet horizon temporel de moyen terme les modèles de prévision de vent restent relativement aléatoires, et les prévisions des effets du vent sur le courant ne sont pas fiables,

- *enfin, à long terme,* le but n'étant pas dans ce cas de fournir au navire une route permettant de diminuer les infills en opération, mais de prévoir globalement le taux d'infills qui serait généré par le passage d'un navire sur une zone donnée, et éventuellement une période donnée (ladite période pouvant être lointaine). Cette prévision à long terme est ensuite utilisée pour tenir compte des infills dans les prévisions de coût et de durée d'une opération que l'on projette.

**APPLICATIONS TEMPS REEL ET MOYEN TERME**

On va décrire ci-dessous les applications temps réel et moyen terme de l'invention, mises en oeuvre en opération sur site. Ces deux types d'application sont mises en oeuvre dans une méthode d'aide à la navigation associée au navire remorquant les streamers, ladite méthode d'aide à la navigation utilisant les prévisions de déformées de streamers en temps réel ou à moyen terme pour indiquer au navire une route optimisée correspondant à une minimisation des infills (pour le profil en cours ou pour le prochain profil à tirer, respectivement). En tout état de cause, ces applications sont mises en oeuvre lorsque le navire a déjà parcouru une première ligne.

***Caractéristiques du* système *de mise en oeuvre de la méthode pour les applications temps réel et moyen terme***

La Demanderesse a comme on l'a dit développé un système mettant en oeuvre cette méthode d'aide à la navigation. Du point de vue de l'utilisateur, ce système offre trois fonctionnalités principales :

- l'affichage des courants et des écarts de dérive des streamers (position et orientation des streamers). Ces paramètres peuvent être mesurés, ou bien prédits (par un module dédié dont on détaillera les caractéristiques plus loin dans ce texte, pour les courants). Sur cet affichage, la comparaison des courants et des écarts de dérives mesurés et prédits permet de juger de la fiabilité des bulletins météo, des mesures de courant et de leur extrapolation,
- la définition et l'affichage du meilleur prochain profil à tirer, c'est-à-dire du profil dont la dérive prédite des streamers est la plus semblable à la dérive mesurée d'un profil adjacent déjà acquis, à même ordonnée Y donnée sur la grille de bin,
- la définition et l'affichage en temps réel, lors de l'enregistrement d'un profil, de la route optimale à suivre pour éviter de faire de la sous couverture ou de la sur couverture.

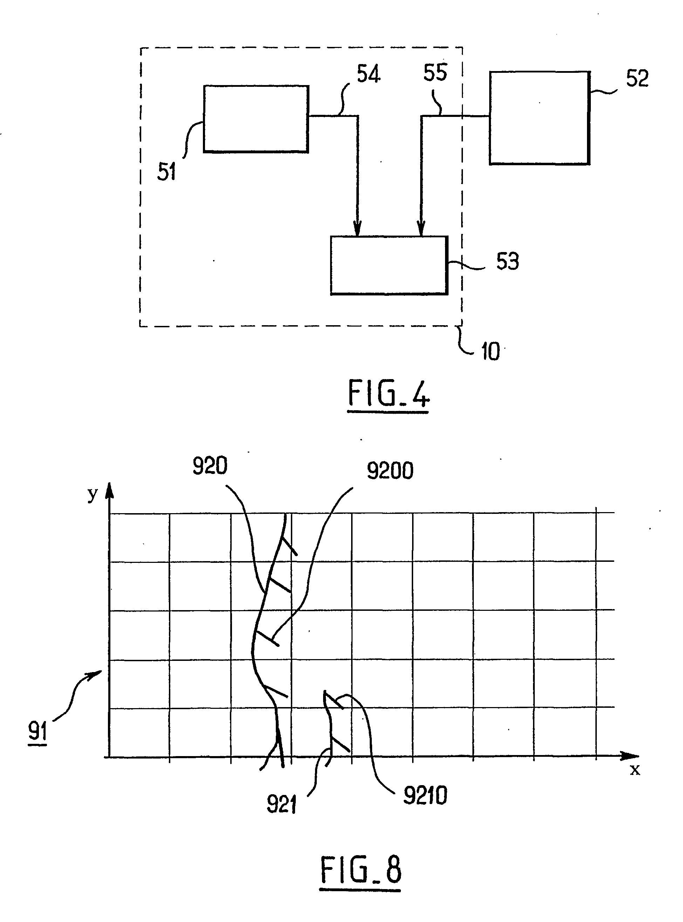

Pour remplir ces trois fonctionnalités, le système met par ailleurs en oeuvre trois sous-ensembles représentés sur la figure 4 :

- un sous-ensemble logiciel de navigation 51 qui effectue l'acquisition en temps réel :

  ➢ de la trajectoire du navire (grâce à des moyens de localisation connus, tels que des moyens mettant en oeuvre un ou plusieurs récepteurs GPS différentiels),
  ➢ des données de courant. Ces données peuvent être des mesures issues d'un courantomètre remorqué par le navire ou embarqué sur le navire, ou prédites par les bulletins météo. Ces données constituent des données « primaires », qui vont être traitées comme on va le voir pour mettre en oeuvre l'invention,
  ➢ de la mesure de la position des streamers, cette mesure étant réalisée par un dispositif adapté (à cet effet, chaque streamer est muni pour mesurer sa déformée d'une pluralité de dispositifs répartis sur sa longueur et permettant de déterminer l'orientation du tronçon de streamer auquel le dispositif est intégré - ces dispositifs peuvent mettre par exemple en oeuvre des compas magnétiques - seules les composantes horizontales du courant étant prises en compte),

- un laboratoire météo 52 qui fournit des prédictions de courant, de vent, de marée et/ou de houle,
- un sous-ensemble 53 de calcul de couverture et de visualisation, comprenant :

  ➢ une interface utilisateur telle qu'un ordinateur de type PC ou autre muni d'un écran, d'un clavier et d'une souris, ainsi que de moyens de mémorisation de données,
  ➢ un module de définition, de calcul et d'affichage de différents 'objets courant' (qui seront définis par la suite dans le texte).

Les sous-ensembles 51 et 53 sont embarqués sur le navire 10, alors que le laboratoire météo 52 peut être séparé du navire. Les données issues du sous-ensemble 51 sont transmises au sous-ensemble 53 par une liaison 54 de type ethernet par exemple, les données du laboratoire météo 52 étant transmises au même sous-ensemble 53 par une liaison 55 sans contact, par exemple une liaison utilisant le réseau internet et mettant en oeuvre des relais radio.

### Les données reçues par le sous-ensemble logiciel de navigation 53

Le sous-ensemble 53 reçoit des sous-ensembles 51 et 52 principalement quatre types de données :

- les bulletins météos et les prédictions météos fournies par des bases de données,
- les données de courants mesurés, acquises au travers du courantomètre,
- les données de positionnement des streamers issues de moyens de mesure associés à un dispositif d'acquisition et de traitement, et
- la trajectoire du bateau.

On va détailler ci-dessous les caractéristiques de ces quatre types de données :

● Les données météo :

Les prédictions météos peuvent provenir soit de bases de données soit de bulletins météo reçus par la liaison 55. ➢ Les bases de données fournissent généralement une prédiction long terme (plusieurs mois) du courant de marée. Un exemple de format de données est le suivant :

| Heure Décimale de la prédiction (GMT) | Date de la prédiction (GMT) | Heure de la prédiction (HH :MM) | Hauteur des vagues due au courant de marée (inutilisée dans la méthode selon l'invention) (m) | Norme de la vitesse du courant de marée (m/s) | Direction du Courant de marée (degrés) |
|---|---|---|---|---|---|
| 0.00 | 01/07/1999 | 00:00 | 0.61 | 0.22 | 171.7 |
| 0.10 | 01/07/1999 | 00:06 | 0.61 | 0.22 | 172.7 |
| 0.20 | 01/07/1999 | 00:12 | 0.62 | 0.22 | 173.7 |

➢ Les bulletins météo concernent des données de prédiction à plus court terme (typiquement 36 heures) pour les courants, le vent, ou la houle. En général, les bulletins météo décomposent le vecteur courant en un courant de marée et un courant résiduel. Un exemple de format de données est le suivant :

| Heure depuis l'heure de la dernière exécution du modèle générant le bulletin | Hauteur des vagues due au courant résiduel (Inutilisé dans la méthode selon l'invention) (m) | Norme de la vitesse du courant résiduel (m/s) | Direction du courant résiduel (degrés) | Hauteur des vagues due au courant de marée (inutilisé dans la méthode selon l'invention) | Norme de la vitesse du courant de marée (m/s) | Direction du courant de marée (degrés) |
|---|---|---|---|---|---|---|
| 00 | 0.05 | 0.03 | 141.74 | 0.12 | 0.10 | 101.65 |
| 01 | 0.05 | 0.02 | 147.19 | 0.31 | 0.13 | 148.20 |
| 02 | 0.05 | 0.03 | 147.19 | 0.43 | 0.17 | 166.80 |
| 03 | 0.05 | 0.03 | 149.74 | 0.45 | 0.18 | 177.00 |

La fréquence de rapatriement de ces bulletins est de l'ordre d'une à deux fois par jour. Les fichiers sont reformatés, si nécessaire traités, puis stockés dans une base de donnée B associée au sous-ensemble 53. Bien qu'actuellement l'échantillonnage surfacique des services de prédiction météo disponibles ne puisse être réalisé qu'avec une résolution assez faible ne permettant pas de distinguer plusieurs zones élémentaires à l'intérieur de la plupart des zones couvertes par une opération d'acquisition, le système peut tenir compte de la localisation précise de l'endroit pour lequel la prévision météo est effectuée, ceci afin de pouvoir tenir compte d'éventuelles variations spatiales des données météo à l'intérieur d'une même zone à couvrir. De même, le système peut tenir compte de la profondeur des courants (pour déduire par interpolation les valeurs de prédiction de courant à l'immersion des streamers lorsque les prédictions sont données à plusieurs immersions entourant l'immersion des streamers).

Dans la suite du document on utilisera le terme bulletin météo pour des informations provenant aussi bien des bases de données que des bulletins météos eux même.

Dans la base B seront stockés des paramètres généraux (qui contiennent des informations sur la société émettant le bulletin météo, la date et l'heure du bulletin, les dates et heures de début et de fin de prévision, le type de donnée prédite et le format de ces données), et des données proprement dites.

Les données météo distinguent deux familles de données (famille courant et famille houle):

➢ *Les données de la famille « courant »* sont caractérisées par un vecteur dont les composantes (vitesse et direction) varient avec le temps, ceci pour un lieu et une profondeur donnée. Ce type de données est utilisable pour les bulletins météos de courant de marée, de courant résiduel (qui correspond essentiellement au courant météo), de courant total et de vent.

Le stockage dans la base B pourra se faire selon le format :

Longitude ,latitude, profondeur (correspondant à un point de mesure),
Date, heure, vitesse (m/s), direction (degrés),
Date, heure, vitesse (m/s), direction (degrés),
Etc... (une série de données temporelles successives étant stockée en association avec chaque point de mesure.).
Longitude ,latitude, profondeur (autre point de mesure),
Date, heure, vitesse (m/s), direction (degrés),
Date, heure, vitesse (m/s), direction (degrés),
Etc...

➢ *Les données de la famille « houle »* découlent des bulletins météo d'état de la mer.

- Les-données de cette famille sont caractérisées par un vecteur dont les composantes (hauteur, direction et fréquence) varient avec le temps, ceci pour un lieu donné. Le stockage dans la base B pourra se faire selon le format :

Longitude latitude,
date, heure, hauteur (m), période (sec), direction (degrés),
date, heure, hauteur (m), période (sec), direction (degrés),
etc...
Longitude, latitude,
date, heure, hauteur (m), période (sec), direction (degrés),
date, heure, hauteur (m), période (sec), direction (degrés),
etc...

● *Les données de courant mesurées* :

Ces données proviennent du courantomètre de bord (courant mesuré), et sont acquises en temps réel par le sous-ensemble 51 et mises à disposition du sous-ensemble 53 au travers d'une liaison informatique référencée 54 sur la figure 4. Ces données seront stockées dans la base B et utilisées avec une périodicité comprise entre 1 et 10 minutes. La structure des données transmises au travers de la liaison 54 est la suivante:

Date, heure, longitude, latitude,
Profondeur1 (m), vitesse(m/s), direction (degrés),
Profondeur2 (m),vitesse (m/s), direction (degrés),
Profondeur3 (m),vitesse (m/s), direction (degrés),
Etc...

● *Les dérives des traces des streamers* :

Ces données sont calculées en temps réel par le sous-ensemble 51 et mises à disposition du sous-ensemble 53 par la liaison 54.

Lors de l'acquisition en temps réel des données de positionnement d'un profil (c'est à dire d'une ligne Li), les valeurs de dérives mesurées sont extraites et stockées par le sous-ensemble 53. Lors de l'import des données par le sous-ensemble 53, les valeurs de dérives mesurées seront stockées dans la base B.

Pour déterminer la dérive des traces, à chaque point de tir de la source acoustique, l'ensemble du dispositif remorqué par le navire est modélisé par deux streamers virtuels S1 et S2 dont la position et la forme correspondent à une moyenne de l'ensemble des streamers du dispositif.

Dans le cas - répandu - où le dispositif remorqué comporte en réalité plus de deux streamers, les deux streamers virtuels S1 et S2 seront ainsi décrits :

• pour leur position, par la position des têtes des streamers externes du dispositif,
• et pour leur orientation, par la moyenne des formes des streamers bâbord (pour S1) et la moyenne des formes streamers tribord (pour S2).

Plus précisément, la forme de chacun des streamers S1 et S2 est modélisée par la position et l'orientation mesurées dans un plan horizontal de trois segments de streamer.

La structure de ces données pourra être :

Date, heure, numéro de point de tir, longitude, latitude, DXb, DYb (position de la tête de S1) , $\phi$1b, $\phi$2b, $\phi$3b (orientation des trois segments de S1 par rapport à la direction Y, ou au Nord), DXt, DYt (position de la tête de S2), $\phi$1t, $\phi$2t, $\phi$3t (orientation des trois segments de S2).

● *La trajectoire du navire*

La trajectoire du navire est stockée en continu avec une récurrence définie, sous la forme:

Date, heure, longitude, latitude, profondeur d'eau.

### *Définition des différents "types de courants"*

Le sous-ensemble 53 comprend des moyens pour définir à partir des données de courant importées (mesurées, ou prédites par les bulletins météo) différents types de courant dans le système développé par la Demanderesse :

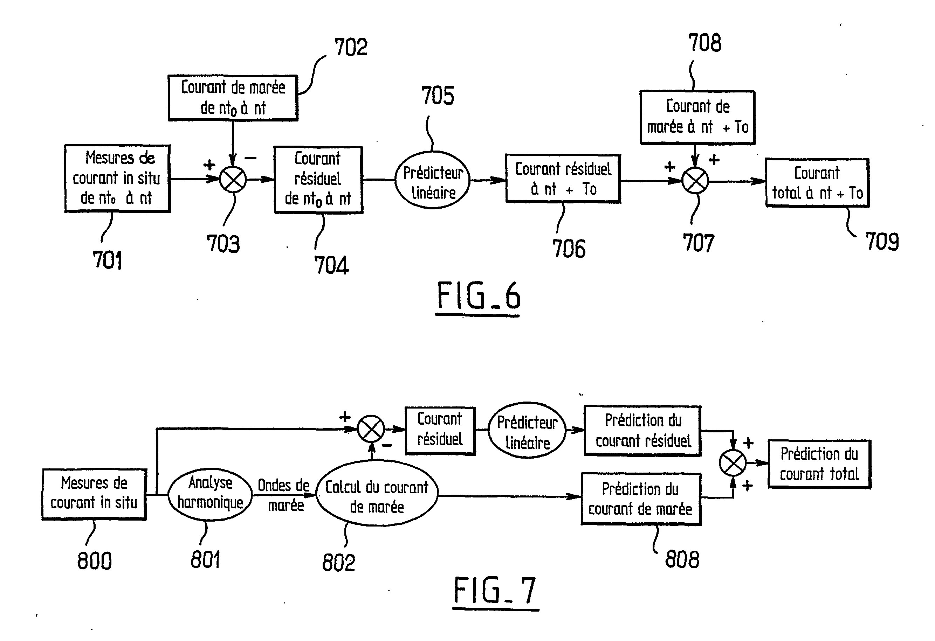

• Type 1: Courant mesuré: Il s'agit du courant total mesuré par un courantomètre,
• Type 2: Courant de marée: Il est issu des bulletins météos, ou déduit des mesures de courant par analyse harmonique,
• Type 3: Courant "marée + résiduel MétéoLab": Il s'agit de la somme d'un courant de marée, et d'un courant résiduel qui est fourni par une société Météo. Le courant de marée peut être issu des bulletins météos, ou déduit des mesures d'un courantomètre. Le courant résiduel est issu des bulletins météos,
• Type 4: Courant "total extrapolé futur": Il s'agit de l'extrapolation (par un module prédicteur spécifique intégré au sous-ensemble 53, dont le fonctionnement sera décrit plus loin et qui permet également d'élaborer les valeurs extrapolées de courant nécessaires au calcul des 'objets courant' de type 5, 6 ou 7), du vecteur courant total mesuré par un courantomètre, par le module prédicteur. L'extrapolation de ce courant peut couvrir les 3 heures à venir,
• Type 5: Courant "marée + résiduel extrapolé futur": Il s'agit de la somme d'un courant de marée et d'un courant résiduel extrapolé par le prédicteur comme cela sera décrit en référence à la figure 6. Le courant de marée peut être issu des bulletins météos, ou déduit des mesures d'un courantomètre.
Le courant résiduel extrapolé futur est calculé par le prédicteur par extrapolation des mesures d'un courantomètre auxquelles sont retirés le courant de marée. L'extrapolation de ce courant peut couvrir les 3 heures à venir,
• Type 6: Courant "total extrapolé passé": Le courant extrapolé passé correspond aux prédictions court terme (ensemble de toutes les prédictions à 1 heure, par exemple) que le prédicteur a faites dans le passé. Il s'agit de l'extrapolation pour un terme donné (1 heure par exemple) du vecteur courant total mesuré par un courantomètre. Ce courant est calculé entre le début de l'opération et l'instant présent,
• Type 7: Courant "marée + résiduel extrapolé passé": Il s'agit de la somme d'un courant de marée et d'un courant résiduel extrapolé passé par le prédicteur. Le courant de marée peut être issu des bulletins météos, ou déduit des mesures d'un courantomètre.
Le courant résiduel extrapolé passé correspond aux prédictions court terme (ensemble de toutes les prédictions à 1 heure, par exemple) que le prédicteur a faites dans le passé.

Ce courant résiduel extrapolé passé est calculé par extrapolation des mesures d'un courantomètre auxquelles sont soustraites les valeurs du courant de marée pour un terme de prédiction (1 heure dans le cas cité). Ce courant est calculé entre le début de l'opération et l'instant présent.

### *Définition des 'objets courant' par l'utilisateur*

L'ordinateur du sous-ensemble 53 est muni d'un logiciel d'interface qui permet à l'utilisateur de créer un 'objet courant' qu'il souhaite faire traiter par le système, en :

- choisissant un type de courant désiré,
- et en affectant à l''objet courant' des paramètres spécifiques, la création d'un 'objet courant' d'un type donné nécessitant le choix de certains paramètres.

A cet effet, ce logiciel d'interface édite à l'écran de l'ordinateur une boîte de dialogue permettant à l'utilisateur:

- de désigner le type de courant choisi. L'utilisateur pourra choisir ce type en fonction de la durée de la période de prédiction souhaitée (de l'ordre de l'heure pour une aide à la navigation en temps réel, de l'ordre de 24 heures pour l'assistance au tirage du prochain profil), et également en fonction des caractéristiques de courant de la zone à couvrir (prédominance de certaines composantes du courant),
- mais également de créer dans le système l'objet 'courant' qui est défini non seulement par son type, mais également par les paramètres suivants :

  ➢ le nom de l''objet courant',
  ➢ les noms des sociétés émettrices des bulletins météos ou des courantomètres que l'utilisateur veut sélectionner pour les courants de marée, les courants résiduels ou autres types de courant,
  ➢ la ou les profondeur(s) sélectionnée(s). L'utilisateur a la possibilité de sélectionner dans le système un des courantomètres déclarés dans ce système ; dans ce cas, l'information « profondeur » sera définie par la première et la dernière cellule entre lesquelles l'utilisateur souhaite que le système réalise une moyenne des vecteurs courants,
  ➢ dans le cas de types de courant faisant intervenir des extrapolations passées: le terme de la prédiction,
  ➢ une particularité graphique permettant ensuite de distinguer à l'écran de l'interface l''objet 'courant' ainsi défini (couleur ou symbole attribué à cet objet 'courant', par exemple).

En fonction du type de l''objet courant', tout ou partie de ces paramètres devra être définie.

Plus précisément, dans un mode de réalisation de l'invention, outre le nom de l''objet courant', son type, ainsi que deux profondeurs déterminées entre lesquelles l'utilisateur souhaite effectuer une moyenne des vecteurs représentant le courant, et enfin les particularités graphiques que l'utilisateur souhaite associer à l''objet courant' ; l'utilisateur devra fixer les paramètres définis ci-dessous pour chaque type respectif de courant :

| Type de courant numéro | 1 | 2 | 3 | 4 | 5 | 6 | 7 |
|---|---|---|---|---|---|---|---|
| Chemin d'accès aux données issues d'un courantomètre | X | | | X | X | X | X |
| Paramètre(s) de réglage du courantomètre | X | | | X | X | X | X |
| Chemin d'accès aux données de courant de marée | | X | X | | X | | X |
| Chemin d'accès aux données de courant résiduel émises par un laboratoire météo | | | X | | | | |
| Terme de la prédiction | | | | | | X | X |

La boite de dialogue permet également à l'utilisateur de créer, modifier, détruire et dupliquer ces objets 'courant' dont les caractéristiques sont enregistrées dans un emplacement de mémoire associé au système.

Une fois que l'utilisateur a ainsi créé un objet 'courant', il a la possibilité, en opération sur zone, de mettre en oeuvre le système pour :

- visualiser l'évolution temporelle d'un ou plusieurs 'objets courant' désirés. A cet effet, l'utilisateur indique au système les caractéristiques souhaitées pour l'écran de visualisation comme cela sera décrit ci-après. Le système calculera alors les valeurs des 'objets courant' soit selon un pas de temps qui pourra être fixé par l'utilisateur, soit lors de l'occurrence d'un événement nouveau (nouvelle mesure de courant, arrivée d'un bulletin météo, modification/suppression/création d'un 'objet courant' par l'utilisateur...),
- visualiser les écarts de positionnement des streamers (le positionnement d'un streamer étant défini par la position X,Y, Z de ses points en fonction du temps), entre des positionnements simulés à partir des 'objets courant' choisis par l'utilisateur, et un positionnement mesuré,
- déterminer en temps réel la route optimale que le bateau doit suivre,
- optimiser le prochain profil à tirer par le bateau.

On précise que pour ces quatre types de mise en oeuvre, le système effectuera des calculs récurrents du ou des 'objets courant' impliqués.

On précise également que dans les deux premiers types de mise en oeuvre évoqués ci-dessus, le système affiche systématiquement l'évolution de valeurs mesurées ('objet courant' de type 1 pour le premier type de mise en oeuvre, écart entre simulation du positionnement de streamer calculé à partir d'un 'objet courant' de type 1, et positionnement mesuré).

Un tel affichage simultané de valeurs mesurées permet à l'utilisateur d'apprécier la qualité des différents 'objets courant' qu'il a définis pour la visualisation et de choisir parmi eux un 'objet courant' pour l'un ou l'autre des deux derniers types de mise en oeuvre.

Le calcul des 'objets courant' construits à partir de courants primaires issus des bulletins météo et/ou du courant de marée déduit des mesures de courant sur zone nécessitent la détermination préalable du bulletin météo particulier et/ou du fichier particulier de courant de marée déduit des mesures de courant sur zone. Ladite détermination s'opère en sélectionnant :

- dans le cas des bulletins météo, celui dont la date de réception est antérieure et la plus récente par rapport à l'instant pour lequel une valeur particulière de l''objet courant' est calculée,
- dans le cas des fichiers courant de marée déduit des mesures de courant, celui dont la date de création est antérieure et la plus récente par rapport à l'instant pour lequel une valeur particulière de l''objet courant' est calculée.

De plus, le mode de calcul d'un 'objet courant' dépend :

- de la chronologie entre l'instant auquel il est calculé et la plage de temps pour laquelle il est calculé,
- et du type de mise en oeuvre qui nécessite son calcul.

Plus précisément, trois cas peuvent se présenter :

- le cas où l'instant auquel le système effectue le calcul de l''objet courant' est calculé est postérieur à la plage temporelle pour laquelle cet 'objet courant' est calculé ; dans ce cas, la position du navire en fonction du temps est connue, et on effectue pour chaque instant de la base de temps de cet 'objet courant' une interpolation spatiale et temporelle entre les vecteurs courant du ou des courants primaires servant à construire l''objet courant',
- le cas où l'instant auquel le système effectue le calcul de l''objet courant' est antérieur à la plage temporelle pour laquelle il est calculé ; dans de cas, la position du navire en fonction du temps est :

  ➢ soit inconnue, dans le cas du type de mise en oeuvre 'visualisation de l'évolution temporelle des 'objets courant'. Dans ce cas, le calcul des valeurs de l''objet courant' est réalisé en imposant que la position future du navire est égale à la position du navire au moment auquel le calcul est effectué. L'interpolation spatiale est donc la même pour tous les instants de la base de temps de l''objet courant',

  ➢ soit supposée, dans le cas des types de mise en oeuvre 'détermination en temps réel de la route optimale' et 'optimisation du prochain profil'. Dans ce cas, on est ramené au cas évoqué ci-dessus, et on effectue pour chaque instant de la base de temps de cet 'objet courant' une interpolation spatiale et temporelle entre les vecteurs courant du ou des courants primaires servant à construire l''objet courant'.

- le cas où l'instant auquel le système effectue le calcul de l''objet courant' est inclus dans la plage temporelle pour laquelle il est calculé ; dans ce cas, on considère les deux sous plages de temps, l'une antérieure à l'instant de calcul et l'autre postérieure à l'instant de calcul, et selon l'appartenance de l'instant pour lequel une valeur particulière de l''objet courant' est calculée à l'une ou l'autre des deux sous-plages, on se ramène aux modes de calcul évoqués dans les deux paragraphes ci-dessus.

### *Visualisation des courants et des dérives*

Il s'agit ici des deux premiers types de mise en oeuvre de l'invention en opération sur zones.

L'interface du sous-ensemble 53 permet de visualiser sous forme de courbes non seulement la route du navire, mais également les courants mesurés et/ou prédits, et les écarts de positionnement entre streamer mesuré et simulé. La comparaison des valeurs mesurées et prédites permet à l'utilisateur d'apprécier en temps réel la qualité des prévisions, et éventuellement de sélectionner un objet 'courant' mieux adapté si les performances en cours sont jugées insuffisantes.

● *Graphiques des courants prédits et mesurés.*

Ces graphiques sont des représentations de plusieurs courbes superposables en fonction du temps avec une option de zoom. Une boite de dialogue permet à l'utilisateur de créer, modifier, détruire et dupliquer ces graphes. Ceux-ci seront définis par:

➢ les dates et heures de début et de fin de graphe,
➢ une boite de filtre permettant de sélectionner les 'objets courant' à représenter,
➢ une direction théorique Y des profils,
➢ le vecteur à représenter,
➢les objets 'courant' à utiliser,
➢ la projection de la vitesse du courant par rapport à la direction définie,
➢ la projection de la vitesse du courant par rapport à X la perpendiculaire à la direction Y définie,
➢ les même courbes mais après application d'un filtrage (moyenne glissante, écart type...).

Le graphe sera redessiné à chaque fois que le système recalcule un des 'objets courant' sélectionnés pour ce graphe. Les bornes en temps du graphe progressent de l'écart de temps d'acquisition du courantomètre. On pourra représenter plusieurs graphes en même temps.

● *Graphique des écarts de dérives*

Le but du graphique est de représenter l'écart latéral à l'abscisse curviligne 1000m entre la position mesurée des streamers et une simulation de la position des streamers qui utilise un objet 'courant' sélectionné par l'utilisateur. Le graphique sera une représentation de plusieurs courbes superposables en fonction du temps avec une option de zoom. Le graphe peut s'étaler du début des opérations jusqu'à l'instant présent.

L'utilisateur définira ces graphes. Une boite de dialogue lui permettra de créer, modifier, détruire et dupliquer ces graphes. Ceux-ci seront définis par:

➢ les dates des heures de début et de fin de graphe,
➢ Une boite de filtre permettant de sélectionner les objets 'courant' à utiliser pour calculer les dérives simulées parmi les objets de type 1, 2, 3, 6, 7,

Le graphe sera redessiné après chaque profil. Les bornes en temps du graphe glisseront de l'écart de temps du profil. On pourra représenter plusieurs graphes en même temps.

### *Prédictions de courant à très court terme*

Le système élaboré par la Demanderesse pour mettre en oeuvre la méthode selon l'invention comprend comme on l'a dit un module de prévision à court terme des courants (ce module étant également appelé « prédicteur »), que le système fait tourner lorsque le calcul d'un 'objet courant' de type 4, 5, 6 ou 7 est nécessaire.

Ces prévisions à court terme sont produites en temps réel et sont essentiellement utilisées pour l'aide à la navigation en temps réel et la visualisation des 'objets courant' et des écarts de positionnement entre streamer réel et streamer simulé. On va ci-dessous décrire les caractéristiques du prédicteur dont les données d'entrée sont les valeurs du courant mesurées jusqu'à l'instant de la prédiction.

Ce prédicteur linéaire doit à un instant t produire une estimation du courant à un instant futur $t+T0$, à partir de la seule série temporelle des données de courant mesurées in situ jusqu'à l'instant t (par exemple par des courantomètres mouillés sur zone au préalable) ou embarqués sur le navire.

Ce prédicteur considère l'acquisition des mesures de courant comme un processus aléatoire stationnaire non centré du second ordre. Le courant prédit est le résultat d'un filtrage linéaire des données mesurées disponibles.

Les composantes de ce filtre seront déduites de la résolution d'un système linéaire, qui résulte lui-même de la minimisation de la variance de l'erreur commise sur la valeur prédite.

Schématiquement, le fonctionnement du prédicteur est le suivant :

Connaissant le courant U(i) de i = 1 à P, on cherche à produire la meilleure estimation de courant Û(P +T0) de U à l'instant P + T0.

On fait pour cela l'hypothèse de départ que courant U est un processus stationnaire non centré du second ordre, et on adopte les notations suivantes :

$$U_p = \begin{pmatrix} U(P) \\ U(P-1) \\ \vdots \\ U(1) \end{pmatrix}$$

$$U_{P+T0} = \begin{pmatrix} U(P+T0) \\ U(P) \\ U(P-1) \\ \vdots \\ U(1) \end{pmatrix}$$

L'estimation Û(P +T0) est le résultat d'un filtrage linéaire de Up c'est-à-dire du produit scalaire d'un vecteur $C_p$ de dimension P avec Up : $\hat{U}(P +T0) = c_P^T U_p$

Soit e(P+T0) la différence entre U(P+T0) et son estimation Û(P +T0). On peut calculer son espérance mathématique :

$$E[e(P + T0)] = E[U(P+T0) - \hat{U}(P +T0)]$$
$$= E[U(P+T0) - c_P^T U_p]$$
$$= a^T E[U_{P+T0}]$$

Dans ce calcul, on a introduit le vecteur a, de dimension P+1, en admettant implicitement que sa première composante vaut 1.

Le principe de l'estimation va être de minimiser la variance de l'erreur sous les contraintes :

- la moyenne de l'erreur doit être nulle,
- la première composante du vecteur a vaut 1.

Mathématiquement, on va déterminer les paramètres a1, a2, ..., aP+1 qui minimisent la forme :

$$G = E\left[(e(P+T0) - E[e(P+T0)])^2\right]$$
$$= a^T \Gamma_U a$$

avec les contraintes :

$$a\mathrm{E}\lfloor U_{p+T0} \rfloor = 0 \qquad\qquad (1)$$

et

$$a1 = 1 \qquad\qquad (2)$$

La matrice $\Gamma_U$ s'écrit :

$$\Gamma_{\mathrm{U}} = \begin{pmatrix} \gamma_0 & \gamma_{T0} & \gamma_{T0+1} & \gamma_{T0+1} & \cdots & \gamma_{P+T0-1} \\ \gamma_{T0} & \gamma_0 & \gamma_1 & \gamma_2 & \cdots & \gamma_{P-1} \\ \gamma_{T0+1} & \gamma_1 & \gamma_0 & \gamma_1 & \ddots & \vdots \\ \gamma_{T0+2} & \gamma_2 & \gamma_1 & \gamma_0 & \ddots & \gamma_2 \\ \vdots & \vdots & \ddots & \ddots & \ddots & \gamma_1 \\ \gamma_{P+T0-1} & \gamma_{P-1} & \cdots & \gamma_2 & \gamma_1 & \lambda_0 \end{pmatrix}$$

$\gamma_i$ étant la fonction d'autocavariance de U.

On a supposé U stationnaire donc son espérance mathématique est invariante dans le temps. Ainsi, on a :

$$\mathrm{E}\lfloor U_{p+T0} \rfloor = \begin{pmatrix} \mathrm{E}[U(P+T0)] \\ \mathrm{E}[U(P)] \\ \mathrm{E}[U(P-1)] \\ \vdots \\ \mathrm{E}[U(1)] \end{pmatrix} = cte \cdot \begin{pmatrix} 1 \\ 1 \\ 1 \\ \vdots \\ 1 \end{pmatrix}$$

La condition (2) devient donc :

$$\sum_{i=1}^{P+1} a_{\,\mathrm{i}} = 0$$

Le problème revient alors à minimiser

$$\mathrm{G} = \begin{pmatrix} 1 - 1 - \sum_{i=3}^{P+1} a_i & a_3 & \cdots & a_{p+1} \end{pmatrix} \quad \Gamma_U \quad \begin{pmatrix} 1 \\ -1 - \sum_{i=3}^{P+1} a_i \\ a_3 \\ \vdots \\ a_{p+1} \end{pmatrix}$$

Pour minimiser la forme G, on dit que son gradient est nul ($\frac{\partial G}{\partial a_i} = 0$ pour tout i entre 3 et P+1), ce qui fournit P-1 équations. Après calculs, on obtient le système suivant :

$$Amat_{(P-1;P-1)} \qquad Usol = vect$$

où $Amat_{(p-1:p-1)}$ est symétrique avec $Amat(i, j) = \gamma_{j-i} - \gamma_j - \gamma_i + \gamma_0$

$$vect(i) = \gamma_{T0} - \gamma_{T0+1} + \gamma_1 - \gamma_0$$

et

$$Usol = \begin{pmatrix} a_3 \\ a_4 \\ \vdots \\ a_{p+1} \end{pmatrix}$$

La résolution du système de P-1 équations fournit le vecteur a, dont les P dernières composantes servent à calculer $\hat{U}(P + T0)$

En pratique, le fonctionnement du prédicteur est assuré par l'exécution d'un programme informatique. Ce programme nécessite en entrée une série de données de courant mesuré échantillonné avec un pas dt.

Après lecture de ces valeurs, le programme effectue une prédiction à chaque pas de temps nt = ndt. Pour cela en disposant des n valeurs précédentes de courant, le programme calcule les éléments statistiques nécessaires au calcul d'une fonction d'auto corrélation de ces n valeurs, et par suite à l'établissement du système linéaire à résoudre.

En résolvant ce système, le programme produit une prévision du courant à nt+T0.

Il est à noter que le nombre n de mesures passées qui servent au calcul de la fonction d'auto corrélation peut être ajusté. Le programme attribue également aux n mesures de la série d'entrée un poids inversement proportionnel à leur ancienneté, afin d'anticiper des changements brusques dus au courant résiduel (correspondant au courant météo) dans le calcul des espérances mathématiques nécessaires à l'obtention de la fonction d'auto corrélation.

Afin de stabiliser les prévisions issues du prédicteur et d'éviter les valeurs aberrantes, la Demanderesse a également mis en oeuvre une méthode de conditionnement du système linéaire à résoudre. A cet égard, on utilisera avec profit une méthode de descente et plus particulièrement la méthode du gradient conjugué.

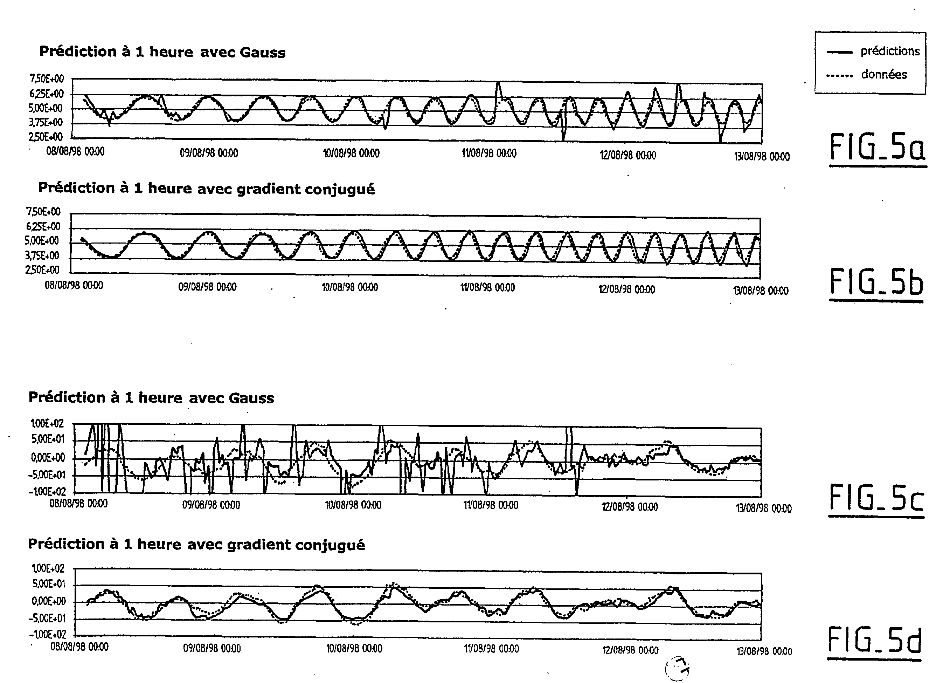

Les figures 5a à 5d montrent des exemples de comparaison avec des mesures de courant, de prévisions P effectuées par le module prédicteur dont le système linéaire a été résolu par une méthode de Gauss (figures 5a et 5c), et de prévisions réalisées par la méthode du gradient conjugué (figures 5b et 5d). On constate que les valeurs aberrantes produites par la méthode de Gauss disparaissent avec l'utilisation du gradient conjugué. De plus cette méthode s'avère bénéfique en terme de temps de calcul.

Pour évaluer la performance du prédicteur linéaire, c'est-à-dire l'écart entre le courant prédit et le courant mesuré (une erreur acceptable pouvant être fixée à une valeur d'environ 2cm/s, voire plus) la Demanderesse a également mis en oeuvre :

- Deux critères principaux :

  ➢ La moyenne de la valeur absolue de l'écart entre prédiction et mesure, notée « abs erreur »,
  ➢ L'écart entre prédiction et mesure en dessous de la valeur duquel on trouve 90% des points de prédiction ; cet écart est noté « (écart à 90%) »,

- Le système calcule également la moyenne de l'écart entre prédiction et mesure afin de mettre à jour un biais éventuel.

Le tableau ci-dessous présente l'erreur à 90% et l'erreur absolue pour des portées de prédiction allant de 1 à 3 heures, les lignes du tableau correspondant à différentes conditions de mesure du courant constaté in situ. Ainsi :

• Les trois premières lignes du tableau correspondent à la performance de la prédiction effectuée, par rapport à des mesures de courantomètres de type « S4 » mouillés en différents points B, E, L, N d'une zone, la ligne S4 représentant la moyenne des performances des trois premières lignes,
• La ligne ADCP correspond aux performances vis-à-vis de mesures provenant d'un dispositif de type « Acoustic Doppler Current Profiler » embarqué sur un navire sillonnant la mer du Nord à la vitesse de 10 noeuds.

| Portées | Ecart à 90% (cm/s) | | | | | abs erreur (cm/s) | | | | |
|---|---|---|---|---|---|---|---|---|---|---|
| | 1h | 1.5h | 2h | 2.5h | 3h | 1h | 1.5h | 2h | 2.5h | 3h |
| B | 4.16 | 5.49 | 6.61 | 7.44 | 8.05 | 1.97 | 2.62 | 3.16 | 3.56 | 3.84 |
| E | 8.52 | 11.07 | 13.11 | 14.60 | 15.59 | 3.99 | 5.20 | 6.21 | 6.89 | 7.32 |
| L,N | 5.29 | 7.08 | 8.71 | 10.06 | 11.04 | 2.51 | 3.38 | 4.19 | 4.86 | 5.35 |
| S4 | 6.14 | 8.06 | 9.61 | 10.76 | 11.54 | 2.90 | 3.82 | 4.58 | 5.12 | 5.48 |
| | | | | | | | | | | |
| ADCP | 8.97 | 13.81 | 17.92 | 21.71 | 24.62 | 3.82 | 6.09 | 8.13 | 9.81 | 11.14 |

On constate :

- que pour une prédiction à court terme (à un horizon de l'ordre de 1 heure et moins) l'erreur absolue est généralement acceptable,
- qu'il existe une disparité assez importante en ce qui concerne l'écart à 90%, critère dont le niveau est par ailleurs plus élevé,
- que les performances des prévisions comparées aux mesures ADCP sont sensiblement moins bonnes que celles comparées aux courantomètres mouillés en un endroit fixe.

La Demanderesse a déterminé que les erreurs résultant des comparaisons des prévisions avec les mesures ADCP proviennent essentiellement de l'étendue de la très large zone géographique couverte par le navire auquel est associé l'ADCP.

En effet, lors du recueil des mesures le navire a sillonné des zones côtières ainsi que des zones situées au large, et les régimes de courant sont différents dans ces deux types de zones.

Or le prédicteur est d'autant plus performant qu'il est mis en oeuvre sur un régime de courant établi, de sorte qu'il se dégage une tendance stable sur plusieurs points de mesure consécutifs.

La Demanderesse a donc intégré dans le prédicteur un perfectionnement permettant de mettre en évidence dans le courant mesuré in situ une partie harmonique dont le comportement régulier est facilement prédictible, afin de soustraire du courant total cette partie harmonique et d'appliquer le prédicteur linéaire sur la partie résiduelle du courant (c'est-à-dire le courant mesuré in situ auquel on a soustrait sa partie harmonique).

On comprend que par exemple dans le cas d'un courant à forte composante de marée, l'amplitude du résiduel doit être significativement inférieure à celle du courant total de sorte que l'erreur de prédiction mesurée selon les critères exposés ci-dessus d'en trouvera diminuée une fois ramenée au courant total.

La démarche générale de ce traitement est schématisée sur la figure 6. Après avoir mesuré in situ le courant entre un instant nt0 passé et un instant nt (étape 701), on détermine un courant harmonique assimilé au courant de marée (étape 702), puis on soustrait en 703 ce courant de marée au courant total mesuré afin d'obtenir en 704 un courant résiduel (qui est par nature non harmonique) entre les instants nt0 et nt.

Ce courant résiduel est ensuite traité par le prédicteur linéaire en 705 pour produire un courant résiduel prédit à l'instant à venir nt+T0. On additionne ensuite en 707 ce courant résiduel prédit au courant de marée prédit en 708 à l'instant nt+T0, cette prédiction étant déterministe. Le résultat de cette addition donne en 709 une prédiction du courant total à nt+T0.

Pour obtenir le courant de marée harmonique, il est possible d'utiliser un modèle numérique par éléments finis sur un maillage de la zone étudiée en alimentant les conditions aux limites par les résultats d'un modèle de plus grande échelle ou par des mesures in situ, ou encore de réaliser une analyse harmonique.

Une telle analyse harmonique peut être conduite par la procédure schématisée sur la figure 7. Le processus de cette figure est analogue à celui décrit ci-dessus :

- l'étape 802 correspondant à un calcul du courant de marée suite à la détermination par analyse harmonique en 801 des ondes de marée principales contenues dans le courant mesuré en 800. Cette étape débouche sur l'équivalent de l'étape 702 décrite ci-dessus,

- l'étape 808 correspondant à l'étape 708 décrite ci-dessus. Pour prédire le courant de marée, on extrapole des ondes de marée (voir ci-dessous l'explication de la détermination des ondes de marée).

La Demanderesse a mis en oeuvre une telle analyse sur des données réelles de courant couvrant des périodes de cinq mois pour le courantomètre B, et de trois mois pour le courantomètre E.

Pour mener l'analyse harmonique, le système réalise tout d'abord une analyse de Fourier de séries de données afin d'identifier dans le spectre fréquentiel de données des pics correspondant aux principales ondes connues génératrices de la marée (ces ondes étant par exemple répertoriées dans l'ouvrage « Introductory Dynamical Oceanography » de MM. Pond et Pickard, les principales ondes étant semi diurnes - ondes M2, S2, N2, K2 - diurnes - ondes K1, O1 P1, Q1 - ou à période longue - Mf, Mn, Ssa.

Il est ainsi possible de dégager les principales composantes harmoniques du courant total et les résultats de la procédure exposée sur les figures 6 et 7 sont présentés sur le tableau ci-dessous, dans lequel on constate une amélioration très sensible de la qualité de la prédiction.

|  | Ecart à 90% (cm/s) | | | abs erreur (cm/s) | | |
|---|---|---|---|---|---|---|
| Portées | 1h | 1.5h | 2h | 1h | 1.5h | 2h |
| B | 2.64 | 3.97 | 5.16 | 1.25 | 1.90 | 2.46 |
| E | 5.30 | 7.62 | 9.39 | 2.42 | 3.52 | 4.32 |

On comprend qu'en opération, il est nécessaire de disposer d'un historique des mesures de courant pour réaliser un telle analyse harmonique, qui sera par ailleurs reproduite périodiquement (de l'ordre de une fois par jour).

En général, les ondes semi diurnes de type N2 sont prépondérantes dans les composantes harmoniques de la marée. En pratique, il apparaît qu'à l'issue d'une période initiale de mesure de courant sur site de l'ordre de un à quelques jours le système dispose d'un historique suffisant pour dégager des mesures de courant les composantes harmoniques les plus significatives.

### *Optimisation de la route du navire en temps réel*

On va maintenant décrire le principe général et les étapes du calcul de la route optimale du navire en temps réel, qui constitue le troisième type de mise en oeuvre de l'invention pendant les opérations sur zone. Ce type de mise en oeuvre fait intervenir l'algorithme de recherche de la route optimale.

Dans ce cas, les données de courant utilisées sont les prévisions à court terme qui ont été sélectionnées par l'utilisateur parmi les types 2, 4 et 5 définis ci-dessus et qui proviennent du module prédicteur décrit ci-dessus.

Le but de cette optimisation est de fournir au navigateur à une fréquence donnée une route optimale à suivre, c'est-à-dire la position optimale du navire en fonction du temps, cette route optimale pouvant être fournie directement par le sous-ensemble 53 au système de pilotage automatique du navire.

A partir des prévisions court terme de courant issues du prédicteur, et en utilisant le modèle hydrodynamique de déformée de câble, l'optimisation de la couverture revient à trouver la route à imposer à la tête de streamer, c'est-à-dire au navire, pour que les CMP à venir soient décalés d'une largeur de cellule selon X latéralement par rapport au profil précédent.

On peut dans une version simplifiée supposer que l'ensemble (navire; tête de streamer) est indéformable. Cette hypothèse peut être levée en mettant en oeuvre un modèle hydrodynamique permettant de calculer les déformations dynamiques de cet ensemble, et suffisamment rapide pour être compatible avec l'algorithme de calcul de route optimal présenté ci-dessous.

### *Algorithme de navigation*

L'algorithme de navigation décrit ci-après est utilisé pour les trois applications de l'invention: "navigation en temps réel", "préparation du prochain profil" et "préparation de l'étude".

On définit tout d'abord pour cette partie les notations suivantes liées au profil adjacent (donc pour lequel les données sont connues):

- $(Xa_{i,k}, Ya_{i,k})$ les coordonnées des différents points du streamer extérieur le long du profil adjacent. Par la suite, l'indice "a" sera relatif au données du profil adjacent, l'indice "i" sera lié au numéro de tir, et l'indice "k" sera lié aux différents points du streamer (l'abscisse curviligne du streamer étant discrétisée). Par la suite, on prendra pour convention: k = 1 correspond à la tête de streamer; k = K correspond à la queue de streamer.

On définit les notations suivantes liées au streamer consigne (c'est-à-dire le streamer "virtuel" dont on cherche à se rapprocher), celui-ci étant obtenu par translation de direction X des points du streamer lors du profil précédent, à la même hauteur (même Y), ainsi qu'éventuellement par un ensemble de rotations, toutes d'angle identique et ayant pour centre la tête du streamer à chaque point de tir. La translation correspond de façon classique à un décalage d'un bin transversal de la ligne de CMP la plus proche du profil à optimiser, mais la méthode inclut la possibilité de modifier cette distance. L'angle de la rotation est classiquement nul, mais la méthode inclut la possibilité contraire.

- $(Xc_{i,k}, Yc_{i,k})$ les coordonnées des différents points du streamer consigne le long du profil à optimiser. Par la suite, l'indice "c" signifiera "consigne".

On définit les notations suivantes pour les paramètres connus liés aux conditions initiales de l'optimisation. L'instant initial correspond par exemple à l'instant en cours pour l'optimisation en temps réel, et aux différents instants admissibles de début de profil dans le cadre de l'optimisation du prochain profil:

- $(X0_k, Y0_k)$: Les coordonnées des différents points du streamer. Dans le cas de l'application "profil en cours", tous ces points sont connus, et sont transmis au système par l'intermédiaire du dispositif de mesure du positionnement. Dans le cas de l'application "prochain profil", seul $Y0_1$ est connu (i.e. la composante Y de la tête de streamer au premier tir de la portion de route à optimiser). Dans ce cas, la forme du streamer sera estimée en effectuant des hypothèses sur la vitesse du navire, et $X0_1$ devient une inconnue du problème
- t0: instant initial de l'optimisation

On définit les notations suivantes pour les prédictions de courant:

- $(cx_{j,lx,ly,lz} , cy_{j,lx,ly,lz})$: Les composantes du courant dans les instants postérieurs à t0. L'indice "j" correspond à la série d'instants relatifs aux prévisions de courants. Les indices "lx", "ly", "lz" correspondent aux coordonnées spatiales des points de l'océan pour lesquelles les prédictions de courant sont disponibles.

On définit également les notations suivantes, liées à la route optimale:

- $(X1_{i,k}, Y1_{i,k})$ les coordonnées des différents points du streamer extérieur le long de la portion de profil étudiée lorsque le navire suit la route optimale. La série $Yl_{i,1}$ (i.e. coordonnées Y successives de la tête de streamer) est connue et coïncide avec la série $Yc_{i,1}$. La série $X1_{i,1}$ (i.e. coordonnées X successives de la tête de streamer) est une inconnue du problème. Les séries $(X1_{i,k}, Y1_{i,k})$ pour lesquelles k est différent de 1 sont le résultat du modèle hydrodynamique de déformée de streamer.
- t1; est la série des instants de tir correspondant à la route optimale. C'est une inconnue du problème.

On définit également les notations suivantes liées à la pondération de la distance entre streamer consigne et streamer associé à la route optimale en fonction de l'abscisse curviligne du point considéré du streamer ("classe d'offsets") :

- $P_k$ le poids à associer à l'écart entre streamer consigne et streamer associé à la route optimale en fonction de la classe d'offsets du point d'indice "k" des deux streamers

La fonction à minimiser doit être une norme de l'écart entre le streamer consigne et le streamer simulé le long de la portion de profil à optimiser. Cette fonction peut par exemple s'exprimer sous les différentes formes mathématiques suivantes:

$$H(X1_{i,1}, t1_i) = \sum_{i=i0}^{I} \sum_{k=1}^{K} |Xc_{i,k} - X1_{i,k}| P_k$$

$$H(X1_{i,1}, t1_i) = \sum_{i=i0}^{I} \sum_{k=1}^{K} P_k \sqrt{(Xc_{i,k} - X1_{i,k})^2 + (Yc_{i,k} - Y1_{i,k})^2}$$

i0 et I état respectivement les numéros du premier et du dernier point de tir de la route à optimiser.

Plusieurs méthodes sont envisageables pour minimiser cette fonction. On va décrire ci-après un exemple de schéma de résolution possible, basé sur la recherche du chemin optimal dans un graphe. Par distinction par rapport au mot "route", qui désigne une série de pointe géographiques dépendants du temps, on désignera par "chemin" une trajectoire particulière du graphe d'optimisation. Ce schéma de résolution particulier consiste à :

- définir dans un premier temps un graphe tri-dimensionnel, dont deux dimensions représentent les coordonnées géographiques et la troisième dimension représente la durée séparant deux plans consécutifs Y = Yn etY=Yn+1,
- simuler l'évolution du streamer en fonction de l'ensemble des chemins que peut emprunter la tête du streamer à l'intérieur de ce graphe,
- sélectionner la route $(X1_{i,1}, Y1_{i,1}, t1_i)$ pour laquelle la fonction $H(X1_{i,1}, t1_i)$ est minimale.

**Définition du graphe d'optimisation**

On définit tout d'abord les directions associées aux trois dimensions du graphe. Par la suite, l'indice "g" désignera les coordonnées et axes de coordonnées du graphe d'optimisation. Les dimensions géographiques Xg et Yg du graphe sont parallèles et de même sens que les axes respectifs X et Y utilisés tout au long de ce document. Ainsi, dans ce graphe d'optimisation, Yg est parallèle à la direction générale des routes du navire, et Xg lui est perpendiculaire. La dimension temporelle $\Delta$tg est un écart de temps pour passer d'un plan Yg = $Yg_n$ du graphe au plan consécutif suivant Yg = $Yg_{n+1}$.

On définit également les notations suivantes, liées au caractère discret des trois axes du graphe d'optimisation:

- $\Delta$Xg et $\Delta$Yg sont les distances séparant deux plans consécutifs du graphe dans les directions respectives Xg et Yg. $\Delta$Xg est un paramètre d'optimisation à rentrer par l'utilisateur,
- $\Delta$tg est le pas de temps séparant deux plans consécutifs du graphe dans la direction $\Delta$Tg,
- NXg, NYg et NTg sont le nombre de points du graphe dans les directions respectives Xg, Yg et $\Delta$Tg.

On définit également les notations liées aux paramètres d'optimisation à définir par l'utilisateur:

- Vmin, Vmax les vitesses minimum et maximum pour la tête de streamer,
- $\varphi$max, l'écart maximal entre le cap de la tête de streamer et celui de la direction théorique des profils,
- Xgmin, Xgmax les bornes minimales et maximales de la tête de streamer selon la direction Xg.

Compte tenu des notations adoptées, on a les relations suivantes:

$$\Delta Yg = \frac{\Delta Xg}{\tan(\varphi \max)}$$

$$\Delta Tg_1 = \frac{\Delta Xg}{\sin(\varphi \max) \cdot V \max}$$

$$\Delta Tg_{NTg} = \frac{\Delta Xg}{\tan(\varphi \max) \cdot V \min}$$

$$\Delta tg = \frac{\Delta Tg_{NTg} - \Delta Tg_1}{NTg - 1}$$

L'axe $Yg$ du graphe admet pour premier point $Yg_1$ le point correspondant à la coordonnée $Yc_{i0,1}$ de la portion de profil à optimiser, et pour dernier point, le point de coordonnée $Yg_{NYg}$ tel que $Yg_{NYg} \square Yc_{I,1}$ et $Yg_{NYg} + \Delta Yg > Yc_{I,1}$.

L'axe $Xg$ du graphe admet pour premier point $Xg_1$ le point de coordonnée $Xgmin$ entré par l'utilisateur, et point dernier point le point de coordonnée $Xg_{NXg}$ tel que $Xg_{NYg} \square Xgmax$ et $Xg_{NXg} + \Delta Xg > Xgmax$.

L'axe $\Delta Tg$ du graphe admet pour premier et dernier points les points dont les coordonnées respectives $\Delta Tg_1$ et $\Delta Tg_{NTg}$ sont données par les relations ci-dessus.

Par ailleurs, on définit les notations relatives à la projection des coordonnées du streamer consigne $(Xc_{i,k}, Yc_{i,k})$ sur le graphe d'optimisation:

- $(Xcg_{ig,k}, Ycg_{ig,k})$ les coordonnées des différents points du streamer consigne le long du profil à optimiser. La tête de ce "streamer consigne grille" est incluse dans le plan $Yg = Yg_{ig}$. Il est à noter que la coordonnée $Xcg_{ig,1}$ de la tête de "streamer consigne grille" n'est presque sûrement pas incluse dans un plan $Xg$ du graphe d'optimisation.

La projection des consignes $(Xc_{i,k}, Yc_{i,k})$ sur le graphe d'optimisation est obtenue par interpolation linéaire basée sur les deux coordonnées $Yc$ de la tête de streamer consigne des points de tir numérotés $i$ et $i+1$ entourant un plan $Yg_{ig}$, c'est-à-dire:

$$Xcg_{ig,k} = \frac{\left(Yg_{ig} - Yc_{i,1}\right)\left(Xc_{i+1,k} - Xc_{i,k}\right)}{\left(Yc_{i+1,1} - Yc_{i,1}\right)}$$

$$Ycg_{ig,k} = \frac{\left(Yg_{ig} - Yc_{i,1}\right)\left(Yc_{i+1,k} - Yc_{i,k}\right)}{\left(Yc_{i+1,1} - Yc_{i,1}\right)}$$

Les exemples de fonctions à minimiser, exprimées plus haut en terme de coordonnées liées au numéro de point de tir, s'expriment, en terme d'indices $ixg$ et $itg$ de la grille d'optimisation:

$$H(ixg_1, ixg_2, ..., ixg_{NYg}, itg_1, itg_2, ..., itg_{NYg}) = \sum_{ig=1}^{NYg} \sum_{k=1}^{K} \left| Xcg_{ig,k} - X1g_{ig,k} \right| P_k$$

$$H(ixg_1, ixg_2, ..., ixg_{NYg}, itg_1, itg_2, ..., itg_{NYg}) = \sum_{ig=1}^{NYg} \sum_{k=1}^{K} P_k \sqrt{\left(Xcg_{ig,k} - X1g_{ig,k}\right)^2 + \left(Ycg_{ig,k} - Y1g_{ig,k}\right)^2}$$

**Simulation de l'évolution du streamer en fonction des différents chemins possibles et sélection de la route optimale**

Les chemins possibles à l'intérieur du graphe d'optimisation défini ci-dessus ont les contraintes décrites ci-après:

- La coordonnée $Y1g$ du (ou des) premier(s) point(s) du (des) chemin(s) est $Yg_1$,
- Dans le cas de l'application "routage en temps réel", la coordonnée $X1g$ du premier point du chemin est telle que son indice $ixg$ minimise la distance $|X1g_1 - Xcg_{1,1}|$,
- Dans le cas de l'application "prochain profil", il y a $NXg$ points de départ correspondants aux $NXg$ points de la grille $Xg$,
- Partant d'un point d'indices $(ixg_{ig}, itg_{ig})$ du plan $Yg_{ig}$, on peut accéder aux points d'indices $(ixg_{ig+1}, itg_{ig+1})$ du plan $Yg_{ig+1}$, tels que: $ixg_{ig+1} = min(NXg, ixg_{ig} +1)$ ou $ixg_{ig+1} = ixg_{ig}$ ou $ixg_{ig+1} = max(1, ixg_{ig} -1)$ et $itg_{ig+1} = min(NTg, itg_{ig} +1)$ ou $itg_{ig+1} = itg_{ig}$ ou $itg_{ig+1} = max(1, itg_{ig} -1)$

L'exploration du graphe s'effectue de la façon suivante:

- On attribue arbitrairement au(x) point(s) de départ un "coût" (c'est-à-dire une valeur de la fonction H à minimiser) nul H_total(ixg$_1$,itg$_1$) = 0,
- On simule tous les chemins partant d'un plan Yg$_{ig}$ au plan suivant Yg$_{ig+1}$,
- Pour tous ces chemins, on calcule un coût élémentaire s'exprimant, par exemple,

$$H\_uni(ixg_{ig},itg_{ig};ixg_{ig+1},itg_{ig+1}) = \sum_{k=1}^{K}\left|Xcg_{ig,k} - X1g_{ig,k}\right|P_k$$

- Pour chaque point d'arrivée au plan Yg$_{ig+1}$, on sélectionne le chemin pour lequel H_total(ixg$_{ig}$,itg$_{ig}$) + H_uni(ixg$_{ig}$, itg$_{ig}$; ixg$_{ig+1}$, itg$_{ig+1}$) est minimum, et, on affecte cette valeur à H_total(ixg$_{ig+1}$,itg$_{ig+1}$)
- Lorsqu'on arrive au dernier plan Yg$_{NYg}$, on sélectionne le point d'arrivée pour lequel H_total(ixg$_{NYg}$,itg$_{NYg}$) est minimum.

Cette méthode d'exploration du graphe présente, entre autre, les trois avantages majeurs suivants:

- Le nombre de chemins admissibles ayant été rendu dénombrable et fini, la solution est trouvée, et cette solution est le chemin optimal,
- Elle élimine à chaque arrivée à un plan Yg$_{ig+1}$, un grand nombre de chemins admissibles (application du théorème "toute sous-route d'une route optimale est optimale"), ce qui la rend facilement applicable compte tenu des moyens informatiques actuels de calcul,
- La recherche de la route optimale s'effectue de façon séquentielle, ce qui permet d'arrêter le calcul à n'importe quel moment, et d'obtenir néanmoins une solution, qui est la solution optimale entre le plan Yg$_1$ et la plan Yg$_{ig}$ auquel on a arrêté le calcul.

### *Optimisation du prochain profil à effectuer par le navire*

Il s'agit ici du quatrième type de mise en oeuvre de l'invention en opérations sur zone.

En cours de mission, le prochain profil à tirer est déterminé par rapport à un des profils déjà acquis auquel le profil à tirer sera adjacent. L'objectif principal est dans cette deuxième application principale de l'invention de déterminer le prochain profil et l'heure du premier tir de source acoustique de ce profil qui permettront d'avoir une dérive des streamers la plus semblable possible à celle de son profil adjacent.

Les méthodes et modules de calcul décrits ci-dessus pour l'aide à la navigation en temps réel sont également mis en oeuvre pour cette optimisation . L'application à moyen terme est cependant spécifique, car :

- on dispose pour calculer une route optimale de plus de temps (le terme de la prédiction étant ici de l'ordre de la demi-journée),
- mais d'autre part, le terme étant plus éloigné du moment de la prévision, l'incertitude est plus grande sur le conditions de courant,
- enfin, le système ne se contente pas dans ce cas de calculer une portion de route optimale, mais il calcule, pour chaque profil donné par l'utilisateur et pour chaque instant de départ dont l'utilisateur aura défini, par profil, les bornes minimale et maximale, la route optimale tout le long du profil.

Pour minimiser les infills, il faut comme on l'a dit que lors de leur passage à la même ordonnée Y sur la grille d'optimisation pour deux profils adjacents, les dérives des streamers soient parallèles. Le critère d'optimisation est ainsi de minimiser la surface pondérée entre le streamer du profil adjacent déjà réalisé et la forme du streamer prédite pour le prochain profil.

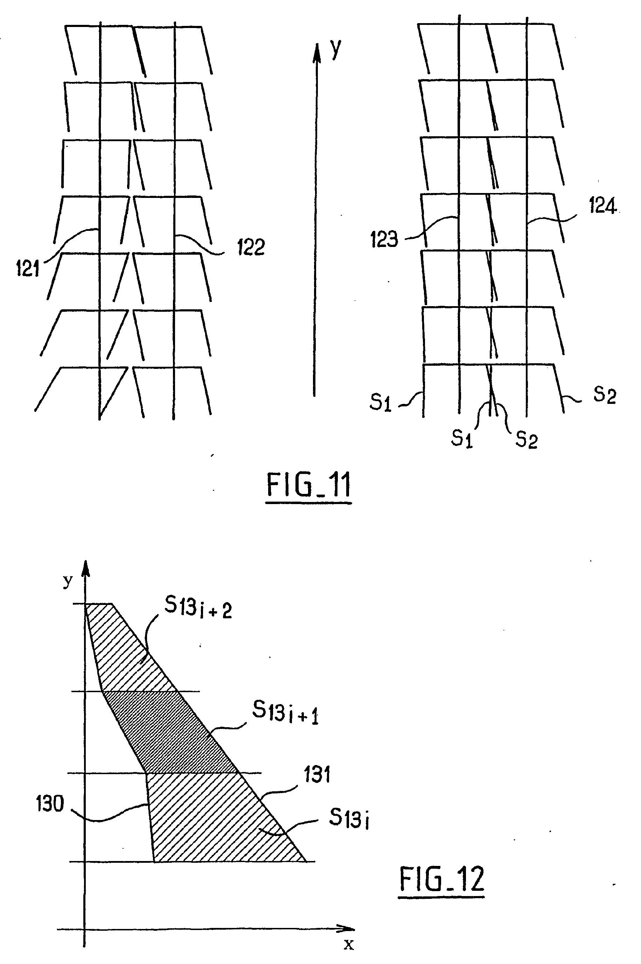

La figure 11 illustre l'objectif à atteindre. Sur cette figure, la partie de gauche représente deux profils adjacents 121 et 122 sur lesquels on constate que les streamers n'ont pas la même orientation en passant à la même ordonnée Y ; cette configuration n'est pas optimale et génère des trous de couverture.

Dans la partie droite de la figure, les streamers S1 et S2 sont parallèles pour les profils 123 et 124, le profil 124 étant optimisé pour « coller au mieux » au profil adjacent 123 qui a déjà été réalisé.

Un critère d'optimisation est défini et illustré sur la figure 12 ; il est calculé pour chaque plan Y = constante de la grille d'optimisation et est proportionnel à la surface pondérée entre le streamer consigne et le streamer simulé.

La somme des surfaces élémentaires pour l'ensemble des points d'intersection entre la tête du streamer "consigne" et les plans Y = constante de la grille d'optimisation d'un profil à tirer sera calculée, de manière à évaluer pour une prédiction donnée le taux d'optimalité.

Ainsi, pour un profil prédit donné, on dispose d'une valeur du critère d'optimisation permettant de prédire la qualité de couverture qui devrait être associée au profil.

Pour chaque profil donné par l'utilisateur et pour chaque instant de départ dont l'utilisateur aura défini, par profil, une fenêtre temporelle par des bornes minimale et maximale, le programme détermine la route optimale et en déduit son instant de départ et son critère d'optimisation associés.

Le programme permettra de:

- ➢ sélectionner les prochains profils adjacents candidats et leurs extrémités de profils si le prochain profil n'a pas les même bornes selon la direction Y en point de tir que les profils adjacents,
- ➢ sélectionner l'objet 'courant' avec lequel sera calculé la dérive prédite (parmi les objets de type 2 et 3 pour cette application),
- ➢ définir le créneau de temps dans lequel on pourra commencer le prochain profil (un utilitaire du sous-ensemble 53 permettant de choisir un ou des prochains profils et de calculer cette information),
- ➢ saisir les paramètres généraux et ceux de la configuration du calcul.

Le programme affichera les résultats et les stockera dans la mémoire. Le stockage comprendra pour chaque profil et pour chaque temps de premier point de tir proposé :

- ➢ la valeur du critère d'optimisation décrit en référence à la figure 12,
- ➢ la date et l'heure optimale du premier point de tir,
- ➢ la position et la vitesse optimale du bateau au premier point de tir,
- ➢ le nombre de points de tir sur lesquels a porté l'optimisation comparé au nombre de points de tir du prochain profil.

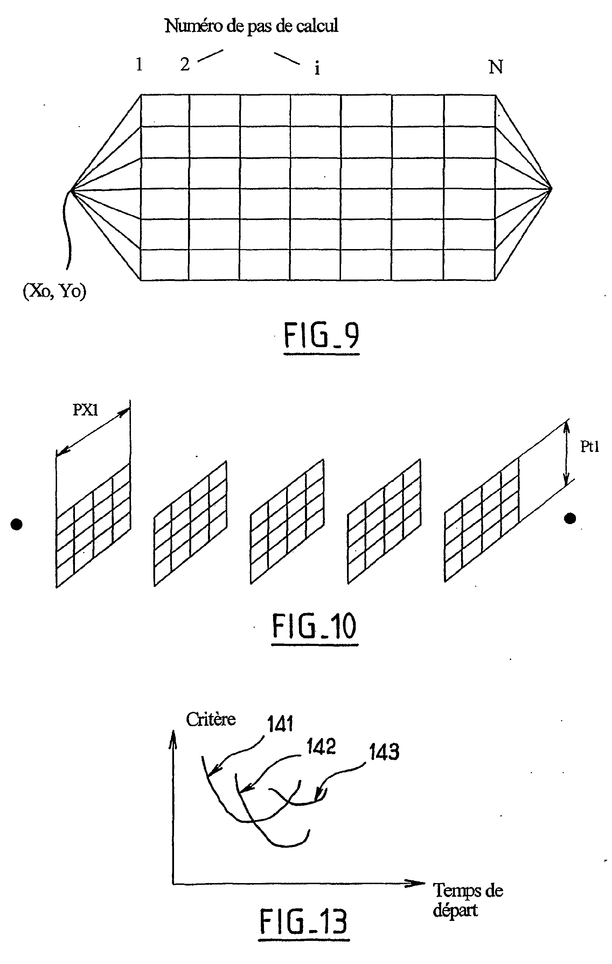

La figure 13 montre l'allure de l'affichage des résultats de l'évolution du critère d'optimisation en fonction du temps, pour trois profils 141 142 et 143.

L'utilisateur aura également la possibilité :

- ➢ de sélectionner un ensemble (Profil; Temps de départ) et d'afficher ses caractéristiques (valeur du critère; position et vitesse au premier point de tir, nombre de points de tir utilisés, ...),
- ➢ de sélectionner un ensemble (Profil; Temps de départ) puis de stocker ce profil théorique avec sa dérive pour visualisation sur la carte de couverture:

### *Application à long terme*

Le système décrit ci-dessus peut être comme on l'a dit mis en oeuvre dans des applications temps réel ou moyen terme pour l'aide à la navigation du navire. Il peut également être mis en oeuvre dans une troisième application de l'invention pour l'exécution d'une autre méthode qui a pour but de prévoir, avant une opération d'acquisition que l'on projette de réaliser, les performances en terme de couverture associées à une grille de bin donnée.

Pour ce type d'application les données de courant utilisées sont les composantes long terme du courant c'est-à-dire le courant de marée et les courants généraux ; en tout état de cause les composantes instationnaires du courant, i.e. dont les caractéristiques statistiques varient au cours du temps (typiquement courant météo résultant en particulier d'interaction avec le vent) sont exclues de cette application long terme.

Il s'agit ici d'évaluer à l'avance les performances en terme de couverture (taux de sous couverture et de sur couverture) associées à une zone donnée.

Pour effectuer d'une telle évaluation on pourra disposer :

- • d'une direction d'acquisition théorique,
- • de l'ensemble des profils théoriques rectilignes,
- • des caractéristiques géométriques et mécaniques du dispositif d'acquisition,
- • éventuellement la période pendant laquelle on projette d'effectuer l'acquisition de données.

On dispose également des données courantométriques pertinentes (courant de marée et courants généraux pour la zone). Dans l'absolu, en l'absence de période d'acquisition spécifiée, ces données courantométriques ne comprennent que les composantes long terme du courant évoquées ci-dessus.

Dans le cas où une période d'acquisition est spécifiée, d'autres composantes du courant de variabilité à moyen terme pourront être pris en compte si l'intervalle de temps séparant le moment d'évaluation du début de la période d'acquisition est court.

On peut ainsi comme on l'a dit évaluer les performances en terme de couverture d'un ensemble de profils théoriques donné en calculant le critère d'optimisation décrit en référence à la figure 12 pour cet ensemble de profils.

On peut également selon une variante de cette méthode utiliser comme données d'entrée l'orientation générale Y des profils à tirer, ainsi que les données courantométriques de la zone, et effectuer à partir d'un premier profil théorique rectiligne une simulation reprenant les étapes de calcul exposées à propos de l'aide à la navigation en temps réel, afin de déterminer un ensemble de trajectoires prenant en compte la courantométrie moyenne de la zone et correspondant à un taux de couverture optimisé.

**Revendications**

1. Méthode de simulation de positionnement de streamer remorqué par un navire (10) lors d'une opération d'acquisition en mer de données géophysiques, ladite opération d'acquisition mettant en oeuvre des tirs d'au moins une source acoustique (Sa) dans une zone à xplorer, caractérisée en-ce que la méthode comprend :

   - la détermination d'une représentation des variations temporelles et du courant marin dans la zone à explorer à partir de valeurs primaires de courant mesurées et/ou prédites
   - la prédiction d'une déformée du streamer à partir de ladite représentation des variations temporelles du courant marin et d'un modèle hydrodynamique d'interaction entre le courant marin, la trajectoire du navire et le streamer.

2. Méthode de simulation de positionnement de streamer selon la revendication **1**, **caractérisée en ce que** la détermination de la représentation des variations temporelles du courant marin dans la zone à explorer comprend :

   - la réception de valeurs primaires de courant, mesurées et/ou prédites;
   - la définition de champs de vecteurs ou 'objets courant' de types respectifs correspondant à différentes représentations du courant, et construits à partir desdites valeurs primaires du courant,
   - le choix d'un 'objet courant' en fonction de l'application visée.

3. Méthode de simulation de positionnement de streamer selon la revendication 2, **caractérisée en ce que** le choix de l''object courant' prend en compte la proximité dans le temps de l'instant pour lequel la prédiction est effectuée avec l'instant auquel la prédiction est réalisée.

4. Méthode de simulation de positionnement de streamer selon la revendication 2 ou 3, **caractérisée en ce que** le choix de l''objet courant' prend en compte une corrélation entre des prédictions antérieures d''objet courant' avec des mesures de courant réalisées aux instants pour lesquels lesdites prédictions antérieures avaient été effectuées.

5. Méthode de simulations de positionnement de streamer selon l'une des revendications 2 à 4, **caractérisée en ce que** les coordonnées d'au moins certains objets 'courant' comprennent des valeurs mesurées sur site.

6. Méthode de simulation de positionnement de streamer selon l'une des revendications 2 à 5, **caractérisée en ce que** les coordonnées d'au moins certains 'objets courant' comprennent des valeurs extrapolées prédictives de courant.

7. Méthode de simulation de positionnement de streamer selon la revendication 6, **caractérisée en ce que** certains 'objets courant' sont calculés par le biais d'un filtre prédicteur permettant d'extrapoler une série de données de courant à partir de mesures de courant effectuées sur la zone d'acquisition.

8. Méthode de simulation de positionnement de streamer selon la revendication 7, **caractérisée en ce que** les types des 'objets courant' définis comprennent les types suivants :

   1) courant total mesuré par un courantométre,
   2) courant de marée issu de bulletins météorologiques, ou déduit de mesures de courant par analyse harmonique,
   3) somme d'un courant de marée et d'un courant résiduel, ledit courant de marée étant issu de bulletins météorologiques ou bien déduit de mesures de courant par analyse harmonique et ledit courant résiduel étant issu de bulletins météorologiques,
   4) extrapolation du courant total mesuré par un courantométre,
   5) somme d'un courant de marée et d'un courant résiduel calculé, ledit courant de marée étant issu de bulletins météorologiques ou bien déduit de mesures de courant par analyse harmonique, et ledit courant résiduel étant obtenu par soustraction dudit courant de marée au courant mesuré sur la zone d'acquisition,

6) historique d'extrapolations passées du courant total mesuré par un courantomètre,

7) somme d'un courant de marée et d'un historique d'extrapolations passées d'une série de valeurs constituées du courant total mesuré par un courantomètre auquel on a retranché un courant de marée, ledit courant de marée étant issu de bulletins météorologiques ou bien déduit de mesures de courant par-analyse harmonique.

9. Méthode de simulation de positionnement de streamer selon la revendication 8, **caractérisée en ce que** lors du calcul des 'objets courant' de type 4, 5, 6 ou 7, la série de données traitée est considérée comme un processus aléatoire stationnaire non centré du second ordre.

10. Méthode de simulation de positionnement de streamer selon la revendication 8 ou 9, **caractérisée en ce que** lors du calcul des valeurs d'un 'objet courant' de type 4, 5, 6 ou 7, on attribue aux mesures de la série de données à extrapoler un poids inversement proportionnel à leur ancienneté, afin d'anticiper des changements brusques dus au courant résiduel.

11. Méthode de simulation de positionnement de streamer selon l'une des revendications 8 à 10, **caractérisée en ce que** lors du calcul d'une valeur particulière d'un 'objet courant' de type 4, 5, 6 ou 7, on minimise une fonction de variance de l'écart entre la valeur prédite et la valeur exacte qu'aura le courant ou le courant résiduel à l'instant pour lequel la prédiction est calculée, ladite fonction de variance étant de la forme:

$$G = \begin{pmatrix} 1 - 1 - \sum_{i=3}^{P+1} a_i & a_3 & \cdots & a_{p+1} \end{pmatrix} \Gamma_U \begin{pmatrix} 1 \\ -1 - \sum_{i=3}^{P+1} a_i \\ a_3 \\ \vdots \\ a_{p+1} \end{pmatrix}$$

12. Méthode de simulation de positionnement de streamer selon l'une des revendications 8 à 11, **caractérisée en ce que** lors du calcul d'une valeur particulière d'un 'objet courant' de type 4, 5, 6 ou 7, on calcule une fonction d'auto-corrélation de la série de données de courant ou de courant résiduel, puis on établit et résout un système linéaire d'équations.

13. Méthode de simulation de positionnement de streamer selon la revendication précédente, **caractérisée en ce que** lors du calcul d'une valeur particulière d'un 'objet courant' de type 4, 5, 6 ou 7, on effectue un conditionnement du système linéaire à résoudre en mettant en oeuvre une méthode de descente, de préférence la méthode du gradient conjugué.

14. Méthode de simulation de positionnement de streamer selon l'une des revendications 7 à 13, **caractérisée en ce que** la méthode donne la possibilité de faire porter le calcul de valeurs extrapolées sur une série de valeurs de courant mesuré à laquelle on a préalablement soustrait un courant de marée, de manière à calculer un courant résiduel extrapolé, puis d'ajouter audit courant résiduel extrapolé, le courant de marée correspondant à l'instant pour lequel l'extrapolation a été effectuée.

15. Méthode de simulation de positionnement de streamer selon l'une des revendications 6 à 14, **caractérisée en ce que** la méthode comprend l'estimation de la performance des différentes prédictions de courant par comparaison avec une mesure de courant réalisée au temps correspondant au temps des prédictions.

16. Méthode de simulation de positionnement de streamer selon l'une des revendications 6 à 15, **caractérisée en ce que** la méthode comprend l'estimation de la performance d'un 'objet courant' issu de prédictions et/ou de mesures de courant, par comparaison entre la mesure du positionnement du streamer et la simulation du positionnement du streamer, ladite simulation prenant en compte l'"objet courant' dont on souhaite estimer la performance.

**17.** Méthode de simulation de positionnement de streamer selon la revendication précédente, **caractérisée en ce que** la performance de l'"objet courant' est décrite par des critères qui comprennent la moyenne de la valeur absolue de l'écart entre mesure et simulation du positionnement des streamers, et/ou l'écart entre prédiction et mesure du positionnement du streamer en dessous de la valeur duquel on trouve 90% des points de prédiction.

**18.** Méthode d'aide à la navigation d'un navire remorquant au moins un streamer en vue de réduire les zones de sous couverture et/ou de sur couverture générées lors d'une opération d'acquisition de données géophysiques en mer pendant laquelle le navire parcourt une pluralité de lignes (Li, Li+1, Li+2) s'étendant selon une direction générale Y définissant une abscisse et formant un réseau recouvrant une zone désirée, **caractérisée en ce qu'**elle met en oeuvre une méthode de simulation de positionnement de streamer selon l'une des revendications précédentes.

**19.** Méthode d'aide à la navigation selon la revendication précédente, le navire ayant déjà parcouru une ligne dudit réseau, **caractérisée en ce que** la méthode comprend la détermination à intervalles d'espace réguliers de l'ensemble des couples {position du navire; instant} de manière à définir une route le long de laquelle, à abscisse donnée suivant l'orientation générale des lignes du réseau, l'orientation du streamer (9210) soit aussi proche que possible de l'orientation d'un streamer associé (9200) lors d'un passage précédent du navire sur une ligne adjacente.

**20.** Méthode d'aide à la navigation selon la revendication 18 ou 19, **caractérisée en ce que** la méthode comprend les étapes suivantes :

- choix d'un 'objet courant' de type adapté,
- définition des paramètres d'optimisation,
- calcul du positionnement d'un 'streamer consigne' à partir des données relatives au positionnement du streamer du profil adjacent et des paramètres d'optimisation,
- prise en compte des données de vitesse et de direction du navire et des données de positionnement du streamer au moment du lancement du calcul d'otpimisation,
- création d'une grille d'optimisation à trois dimensions, une première dimension (Y) étant parallèle à ladite direction générale une seconde direction (X) étant perpendiculaire à la direction générale, et incluse dans le plan horizontal, la troisième dimension (DT) représentant les incréments de temps possibles entre deux noeuds distants d'une cellule de grille selon la direction générale (Y),
- simulations de l'évolution du positionnement du streamer remorqué par un navire empruntant toutes les routes définies par les noeuds de la grille d'optimisation,
- calcul pour toutes les routes envisagées d'une norme de l'écart entre le positionnement du streamer simulé et le positionnement du streamer consigne,
- calcul d'une route optimale pour laquelle la norme associée est minimum.

**21.** Méthode d'aide à la navigation selon la revendication précédente, **caractérisée en ce que** l'étape d'optimisation comprend la minimisation d'une norme de l'écart entre le positionnement du streamer consigne et le positionnement du streamer simulé.

**22.** Méthode d'aide à la navigation selon la revendication précédente, **caractérisée en ce que** ladite norme à minimiser est de la forme :

$$H(X1, \delta t1) = \sum_{j=1}^{J} \sum_{k=1}^{K} \left| X_{consigne}(k,j) - X_{prédit}(k,j) \right| f(k)$$

où:0

- X1 est une série de J valeurs consécutives de la position de la tête du streamer selon la direction horizontale de la grille d'optimisation perpendiculaire à la direction générale,
- $\delta t1$ est une série de J valeurs consécutives de la durée que met la tête du streamer pour passer d'un noeud de la grille d'optimisation de coordonnées $(X_{i1}, Y_j, \delta t_{k1})$ à un noeud de coordonnées $(X_{i2}, Y_{j+1}, \delta t_{k2})$,
- J est le nombre de noeuds de la grille selon ladite direction générale (Y),
- K est le nombre de points de l'abscisse curviligne du streamer discrétisé,
- $X_{consigne}(k, j)$ est la position selon l'axe X du point k du "streamer consigne" lorsque la tête de ce dernier est au niveau du jième plan de la grille d'optimisation selon l'axe Y,

- X$_{prédit}$(k, j) est la position selon l'axe X du point k du streamer simulé lorsque la tête de ce dernier est au niveau du jième plan de la grille d'optimisation selon l'axe Y,
- f(k) est une fonction de pondération affectée à l'écart entre streamer simulé et streamer consigne.

23. Méthode d'aide à la navigation selon l'une des revendications 21 ou 22, **caractérisée en ce que** la méthode met en oeuvre un critère d'optimisation déduit d'un écart entre des données mesurées et prédites de positionnement des streamers.

24. Méthode d'aide à la navigation selon l'une des revendications 19 à 23, **caractérisée en ce que** l'étape d'optimisation de couverture de zone est réalisée en temps réel de manière à fournir au navire une série de triplets {instant; position du navire; vitesse du navire} à suivre pour optimiser la trajectoire du navire sur une ligne que le navire est en train de parcourir.

25. Application de la méthode d'aide à la navigation selon l'une des revendications 19 à 23 pour déterminer une trajectoire et une heure de début associées à une prochaine ligne devant être parcourue par le navire, ainsi que la meilleure prochaine ligne à effectuer..

26. Application selon la revendication précédente, **caractérisée en ce qu'**on recherche à l'intérieur d'un créneau temporel donné une heure de début de ligne correspondant à une minimisation de la sous couverture et de la sur couverture.

27. Méthode de prévision du taux de couverture associé à une opération d'acquisition de données géophysiques que l'on projette de réaliser en mer sur une zone donnée, **caractérisée en ce que** la méthode met en oeuvre une simulation de route d'un navire comprenant une méthode d'aide à la navigation selon l'une des revendications 18 à 23.

## Claims

1. Method of simulating the positioning of a streamer towed by a ship (10) during an operation of acquiring geophysical data at sea, said acquisition operation making use of shots from at least one sound source (Sa) in an area to be explored, **characterized in that** the method comprises:

   - the determination of a representation of the temporal variations in the sea current in the area to be explored from primary current values measured and/or predicted
   - the prediction of a deformation of the streamer from said representation of the temporal variations in the sea current and a hydrodynamic model of interaction between the sea current, the path of the ship and the streamer.

2. Method of simulating streamer positioning according to claim 1, **characterized in that** the determination of the representation of the temporal variations in the sea current in the area to be explored comprises:

   - receiving primary current values, measured and/or predicted;
   - defining vector fields or 'current objects' of respective types corresponding to different representations of the current and constructed from said primary current values; and
   - selecting a 'current object' according to the intended application.

3. Method of simulating streamer positioning according to claim 2, **characterized in that** 'current object' selection takes account of proximity in time between the instant for which the prediction is made and the instant at which the prediction is implemented.

4. Method of simulating streamer positioning according to claim 2 or 3, **characterized in that** 'current object' selection takes account of correlation between earlier 'current object' predictions and measurements of current performed at the instants for which said earlier predictions were made.

5. Method of simulating streamer positioning according to any one of claims 2 to 4, **characterized in that** the coordinates of at least some 'current objects' comprise values measured on site.

6. Method of simulating streamer positioning according to any one of claims 2 to 5, **characterized in that** the coordinates of at least some 'current objects' comprise extrapolated values predicting current.

**7.** Method of simulating streamer positioning according to claim 6, **characterized in that** some 'current objects' are computed by using a predictor filter enabling a current data series to be extrapolated from measurements of current made in the acquisition zone.

**8.** Method of simulating streamer positioning according to claim 7, **characterized in that** the defined types of 'current object' comprise the following types:

1) total current as measured by a current meter;
2) tidal current as derived from meteorological bulletins, or as deduced from measurements of current by harmonic analysis;
3) the sum of a tidal current plus a residual current, said tidal current being derived from meteorological bulletins or being deduced from measurements or current by harmonic analysis, and said residual current being taken from meteorological bulletins;
4) an extrapolation from total current as measured by a current meter;
5) the sum of a tidal current and a computed residual current, said tidal current being taken from meteorological bulletins or being derived from measurements of current by harmonic analysis, and said residual current being obtained by subtracting said tidal current from the current measured in the acquisition zone;
6) a history of past extrapolations of the total current as measured by a current meter;
7) the sum of a tidal current and a history of past extrapolations of a series of values constituted by the total current as measured by a current meter from which a tidal current has been subtracted, said tidal current being taken from meteorological bulletins or being derived from measurements of current by harmonic analysis.

**9.** Method of simulating streamer positioning according to claim 8, **characterized in that**, while computing 'current objects' of types 4, 5, 6, or 7, the processed data series is considered as a second order non-centred steady random process.

**10.** Method of simulating streamer positioning according to claim 8 or 9, **characterized in that**, while computing values of a 'current object' of type 4, 5, 6, or 7, weights are given to the measurements of the data series for extrapolation, which weights are inversely proportional to their age, for the purpose of anticipating sudden changes due to the residual current.

**11.** Method of simulating streamer positioning according to any one of claims 8 to 10, **characterized in that**, while computing a particular value of a 'current object' of type 4, 5, 6, or 7, a variance function of the difference between the predicted value and the exact value of the current or the residual current at the instant for which the prediction was computed is minimized, where said variance function has the form:

$$G = \begin{pmatrix} 1 & -1-\sum\limits_{i=3}^{P+1} a_i & a_3 & \cdots & a_{p+1} \end{pmatrix} \Gamma_U \begin{pmatrix} 1 \\ -1-\sum\limits_{i=3}^{P+1} a_i \\ a_3 \\ \vdots \\ a_{p+1} \end{pmatrix}$$

**12.** Method of simulating streamer positioning according to any one of claims 8 to 11, **characterized in that**, while computing a particular value of a 'current object' of type 4, 5, 6, or 7, an autocorrelation function of the current or residual current data series is computed, and then a linear system of equations is set up and solved.

**13.** Method of simulating streamer positioning according to the preceding claim, **characterized in that**, while computing a particular value of a 'current object' of type 4, 5, 6, or 7, the linear system to be solved is conditioned by implementing a descent method, preferably the conjugate gradient method.

**14.** Method of simulating streamer positioning according to any one of claims 7 to 13, **characterized in that** the method provides the option of computing extrapolated values on a series of measured current values from which a tidal current has previously been subtracted so as to compute an extrapolated residual current, and then adding the tidal current corresponding to the instant for which the extrapolation has been made to said extrapolated residual current.

**15.** Method of simulating streamer positioning according to any one of claims 6 to 14, **characterized in that** the method comprises estimating the performance of different predictions of current by comparison with a measurement of current performed at the time corresponding to the time of the predictions.

**16.** Method of simulating streamer positioning according to any one of claims 6 to 15, **characterized in that** the method comprises estimating the performance of a 'current object' derived from predictions and/or measurements of current by comparing the measured streamer positioning and the simulated streamer positioning, said simulation taking account of the 'current object' the performance of which is to be estimated.

**17.** Method of simulating streamer positioning according to the preceding claim, **characterized in that** the performance of the 'current object' is described by criteria which comprise the average of the absolute value of the difference between measurement and simulation of streamer positioning, and/or the difference between predicted and measured streamer positioning below the value for which 90% of the prediction points are to be found.

**18.** Method of assisting the navigation of a ship towing at least one streamer in order to reduce zones of undercoverage and/or overcoverage generated during a geophysical data acquisition operation at sea during which the ship travels along a plurality of lines (Li, Li+1, Li+2) extending in a general Y direction defining an abscissa and forming an array covering a desired zone, the method being **characterized in that** it implements a method of simulating streamer positioning according to one of the preceding claims.

**19.** Method of assisting navigation according to the preceding claim, the ship having already travelled along a line of said network, **characterized in that** the method comprises determining all the {ship position; instant} pairs at regular intervals in space so as to define a route along which the orientation of the streamer (9210) at a given abscissa along the general orientation of the lines of the network is as close as possible to the orientation of an associated streamer (9200) during a previous pass of the ship along an adjacent line.

**20.** Method of assisting navigation according to claim 18 or 19, **characterized in that** the method comprises the following steps:

- selecting a 'current object' of appropriate type;
- defining optimization parameters;
- computing the positioning of a 'reference streamer' from data relating to the positioning of the streamer of the adjacent profile and the optimization parameters;
- taking account of ship speed and direction data and streamer positioning data at the time that the optimization computation is started;
- creating a three-dimensional optimization grid with a first dimension (Y) parallel to said general direction, a second direction (X) being perpendicular to the general direction, and included in the horizontal plane, and the third dimension (DT) representing possible time increments between two nodes spaced apart by one grid cell in the general direction (Y);
- simulating variations in the positioning of the streamer towed by a ship following all of the routes defined by the nodes of the optimization grid;
- for all of the envisaged routes, computing a norm of the difference between simulated streamer positioning and reference streamer positioning; and
- computing an optimum route for which the associated norm is a minimum.

**21.** Method of assisting navigation according to the preceding claim, **characterized in that** the optimization step comprises minimizing a norm of the difference between reference streamer positioning and simulated streamer positioning.

**22.** Method of assisting navigation according to the preceding claim, **characterized in that** said norm to be minimized has the form:

$$H(X1, \delta t1) = \sum_{j=1}^{J} \sum_{k=1}^{K} \left| X_{reference}(k,j) - X_{predicted}(k,j) \right| f(k)$$

where:

- X1 is a series of J consecutive values for the position of the streamer head along the horizontal direction of the optimization grid perpendicular to the general direction;
- $\delta t1$ is a series of J consecutive values for the time taken by the streamer head to pass from one node of the optimization grid of coordinates $(X_{i1}, Y_j, \delta t_{k1})$ to a node having coordinates $(X_{i2}, Y_{j+1}, \delta t_{k2})$ ;
- J is the number of nodes of the grid in said general direction (Y);
- K is the number of curvilinear abscissa points of the discretized streamer;
- $X_{consigne}(k,j)$ is the position along the X axis of the point "k" of the 'reference streamer' when the head of the latter is at the jth plane of the optimization grid along the Y axis;
- $X_{prédit}(k,j)$ is the position along the X axis of the point "k" of the simulated streamer when the head of the latter is at the jth plane of the optimization grid along the Y axis; and
- f(k) is a weighting function applied to the difference between the simulated streamer and the reference streamer.

23. Method of assisting navigation according to one of claims 21 or 22, **characterized in that** the method implements an optimization criterion for said difference between the measured and predicted streamer-positioning data.

24. Method of assisting navigation according to any one of claims 19 to 23, **characterized in that** the step of optimizing zone coverage is implemented in real time so as to provide the ship with a series of {instant; ship position; ship speed} triplets to follow so as to optimize the path of the ship along a line that the ship is following.

25. Application of the method of assisting navigation according to any one of claims 19 to 23 to determining a path and a starting time associated with a future line that is to be followed by the ship, and also the best future line to follow.

26. Application according to the preceding claim, **characterized in that** a line starting time is sought from within a given time window that corresponds to minimizing undercoverage and overcoverage.

27. Method of predicting the coverage fraction associated with an operation of acquiring geophysical data that is to be performed at sea over a given zone, **characterized in that** it implements simulating the route of a ship comprising a method of assisting navigation according to any one of claims 18 to 23.

**Patentansprüche**

1. Verfahren zur Simulation der Positionierung eines Streamer-Schleppkabels, das während einer Operation zur Erfassung geophysikalischer Daten auf dem Meer von einem Schiff (10) gezogen wird, wobei die Erfassungsoperation in einer zu explorierenden Zone Schüsse von wenigstens einer akustischen Quelle (Sa) einsetzt, **dadurch gekennzeichnet, dass** das Verfahren Folgendes umfasst:

- Bestimmen einer Repräsentation der zeitlichen Veränderungen der Meeresströmung in der zu explorierenden Zone, und dies ausgehend von gemessenen und/oder vorhergesagten primären Strömungswerten,
- Vorhersagen einer Deformation des Streamer-Schleppkabels ausgehend von der Repräsentation der zeitlichen Veränderungen der Meeresströmung und einem hydrodynamischen Modell der Wechselwirkung zwischen der Meeresströmung, der Bahn des Schiffes und dem Streamer-Schleppkabel.

2. Verfahren zur Simulation der Positionierung eines Streamer-Schleppkabels nach Anspruch 1, **dadurch gekennzeichnet, dass** das Bestimmen der Repräsentation der zeitlichen Veränderungen der Meeresströmung in der zu explorierenden Zone Folgendes umfasst:

- Empfangen der gemessenen und/oder vorhergesagten primären Strömungswerte;
- Definieren von Vektorfeldern oder "Strömungsobjekten" von jeweiligen Typen, die zu verschiedenen Repräsentationen der Strömung gehören und auf Basis der primären Strömungswerte konstruiert werden;

- Auswählen eines "Strömungsobjekts" in Abhängigkeit von der beabsichtigten Anwendung.

3. Verfahren zur Simulation der Positionierung eines Streamer-Schleppkabels nach Anspruch 2, **dadurch gekennzeichnet, dass** die Auswahl des Strömungsobjekts die zeitliche Nähe des Zeitpunkts, für den die Vorhersage durchgeführt wird, und des Zeitpunkts, zu dem die Vorhersage realisiert wird, berücksichtigt.

4. Verfahren zur Simulation der Positionierung eines Streamer-Schleppkabels nach Anspruch 2 oder 3, **dadurch gekennzeichnet, dass** die Auswahl des Strömungsobjekts eine Korrelation zwischen vorherigen Strömungsobjekt-Vorhersagen und Strömungsmessungen berücksichtigt, die zu den Zeitpunkten ausgeführt werden, für die die vorherigen Vorhersagen durchgeführt wurden.

5. Verfahren zur Simulation der Positionierung eines Streamer-Schleppkabels nach einem der Ansprüche 2 bis 4, **dadurch gekennzeichnet, dass** die Koordinaten von wenigstens einigen bestimmten "Strömungsobjekten" Werte enthalten, die am Einsatzort gemessen wurden.

6. Verfahren zur Simulation der Positionierung eines Streamer-Schleppkabels nach einem der Ansprüche 2 bis 5, **dadurch gekennzeichnet, dass** die Koordinaten von wenigstens einigen bestimmten "Strömungsobjekten" Strömungswerte enthalten, die prädiktiv extrapoliert sind.

7. Verfahren zur Simulation der Positionierung eines Streamer-Schleppkabels nach Anspruch 6, **dadurch gekennzeichnet, dass** bestimmte "Strömungsobjekte" durch die Abweichung eines Prädiktionsfilters berechnet werden, der es gestattet, ausgehend von Strömungsmessungen, die in der Erfassungszone durchgeführt wurden, eine Reihe von Strömungsdaten zu extrapolieren.

8. Verfahren zur Simulation der Positionierung eines Streamer-Schleppkabels nach Anspruch 7, **dadurch gekennzeichnet, dass** die definierten Typen der "Strömungsobjekte" die folgenden Typen umfassen:

   1) Gesamtströmung, gemessen durch einen Strömungsmesser,
   2) Gezeitenströmung, die aus meteorologischen Berichten stammt oder durch Frequenzanalyse aus Strömungsmessungen abgeleitet ist,
   3) Summe aus einer Gezeitenströmung und einer Restströmung, wobei die Gezeitenströmung aus meteorologischen Berichten stammt oder durch Frequenzanalyse aus Strömungsmessungen abgeleitet ist und die Restströmung aus meteorologischen Berichten stammt,
   4) Extrapolation der Gesamtströmung, die durch einen Strömungsmesser gemessen wird,
   5) Summe aus einer Gezeitenströmung und einer berechneten Restströmung, wobei die Gezeitenströmung aus meteorologischen Berichten stammt oder durch Frequenzanalyse aus Strömungsmessungen abgeleitet ist und die Restströmung durch eine Subtraktion der Gezeitenströmung von der Strömung, die in der Erfassungszone gemessen wird, erhalten wird,
   6) Historie vergangener Extrapolationen der Gesamtströmung, die von einem Strömungsmesser gemessen wurde,
   7) Summe aus einer Gezeitenströmung und einer Historie vergangener Extrapolationen einer Reihe von Werten, die aus der Gesamtströmung bestehen, die von einem Strömungsmesser gemessen wurde, wobei hiervon eine Gezeitenströmung abgezogen wird und wobei die Gezeitenströmung aus meteorologischen Berichten stammt oder durch Frequenzanalyse aus Strömungsmessungen abgeleitet ist.

9. Verfahren zur Simulation der Positionierung eines Streamer-Schleppkabels nach Anspruch 8, **dadurch gekennzeichnet, dass** bei der Berechnung von "Strömungsobjekten" vom Typ 4, 5, 6 oder 7 die bearbeitete Datenreihe als ein nicht zentrierter stationärer stochastischer Prozess zweiter Ordnung aufgefasst wird.

10. Verfahren zur Simulation der Positionierung eines Streamer-Schleppkabels nach Anspruch 8 oder 9, **dadurch gekennzeichnet, dass** bei der Berechnung der Werte eines "Strömungsobjekts" vom Typ 4, 5, 6 oder 7 den Messungen der zu extrapolierenden Datenreihe ein Gewicht zugeordnet wird, das umgekehrt proportional zu ihrem Alter ist, um plötzliche Änderungen aufgrund der Restströmung zu antizipieren.

11. Verfahren zur Simulation der Positionierung eines Streamer-Schleppkabels nach einem der Ansprüche 8 bis 10, **dadurch gekennzeichnet, dass** bei der Berechnung eines bestimmten Werts eines "Strömungsobjekts" vom Typ 4, 5, 6 oder 7 eine Varianzfunktion des Abstands zwischen dem vorhergesagten Wert und dem exakten Wert minimiert wird, den die Strömung oder die Restströmung zu dem Zeitpunkt hat, für den die Vorhersage berechnet ist, wobei die Varianzfunktion die folgende Form hat:

$$G = \left( 1 - 1 - \sum_{i=3}^{P+1} a_i \quad a_3 \quad \cdots \quad a_{p+1} \right) \quad \Gamma_{ll} \quad \begin{pmatrix} 1 \\ -1 - \sum_{i=3}^{P+1} a_i \\ a_3 \\ \vdots \\ a_{p+1} \end{pmatrix}$$

**12.** Verfahren zur Simulation der Positionierung eines Streamer-Schleppkabels nach einem der Ansprüche 8 bis 11, **dadurch gekennzeichnet, dass** bei der Berechnung eines bestimmten Werts eines "Strömungsobjekts" vom Typ 4, 5, 6 oder 7 eine Autokorrelationsfunktion der Datenreihe der Strömung oder der Restströmung berechnet und anschließend ein lineares Gleichungssystem aufgestellt und gelöst wird.

**13.** Verfahren zur Simulation der Positionierung eines Streamer-Schleppkabels nach dem vorhergehenden Anspruch, **dadurch gekennzeichnet, dass** bei der Berechnung eines bestimmten Werts eines "Strömungsobjekts" vom Typ 4, 5, 6 oder 7 eine Konditionierung des zu lösenden linearen Systems durchgeführt wird, indem ein Abstiegsverfahren, und bevorzugt das Verfahren konjugierter Gradienten, eingesetzt wird.

**14.** Verfahren zur Simulation der Positionierung eines Streamer-Schleppkabels nach einem der Ansprüche 7 bis 13, **dadurch gekennzeichnet, dass** das Verfahren es gestattet, die Berechnung der extrapolierten Werte auf eine Reihe von gemessenen Strömungswerten zu übertragen, von der vorab eine Gezeitenströmung abgezogen wurde, und dies derart, dass eine extrapolierte Restströmung berechnet und anschließend zu der extrapolierten Reströmung die Gezeitenströmung hinzugefügt wird, die zu dem Zeitpunkt gehört, für den die Extrapolation durchgeführt wurde.

**15.** Verfahren zur Simulation der Positionierung eines Streamer-Schleppkabels nach einem der Ansprüche 6 bis 14, **dadurch gekennzeichnet, dass** das Verfahren das Schätzen der Leistungsfähigkeit der verschiedenen Strömungsvorhersagen umfasst, und dies durch den Vergleich mit einer Strömungsmessung, die zu dem Zeitpunkt ausgeführt wird, der dem Zeitpunkt der Vorhersagen entspricht.

**16.** Verfahren zur Simulation der Positionierung eines Streamer-Schleppkabels nach einem der Ansprüche 6 bis 15, **dadurch gekennzeichnet, dass** das Verfahren das Schätzen der Leistungsfähigkeit eines "Strömungsobjekts" umfasst, das aus Vorhersagen und/oder Messungen der Strömung stammt, und dies durch einen Vergleich zwischen der Messung der Positionierung des Streamer-Schleppkabels und der Simulation der Positionierung des Streamer-Schleppkabels, wobei die Simulation das "Strömungsobjekt" berücksichtigt, für das die Leistungsfähigkeit geschätzt werden soll.

**17.** Verfahren zur Simulation der Positionierung eines Streamer-Schleppkabels nach dem vorhergehenden Anspruch, **dadurch gekennzeichnet, dass** die Leistungsfähigkeit des "Strömungsobjekts" durch Kriterien beschrieben wird, die Folgendes umfassen: den Mittelwert des Absolutwerts des Abstands zwischen der Messung und der Simulation der Positionierung der Streamer-Schleppkabel und/oder den Abstand zwischen der Vorhersage und der Messung der Positionierung des Streamer-Schleppkabels, wobei unterhalb von diesem Wert sich 90% der Vorhersagepunkte befinden.

**18.** Verfahren zur Navigationshilfe für ein Schiff, das wenigstens ein Streamer-Schleppkabel schleppt, mit dem Ziel, bei einer Operation zum Erfassen geophysikalischer Daten auf dem Meer die Zonen mit Unterabdeckung und/oder Überabdeckung zu reduzieren, wobei das Schiff während dieser mehrere Linien (Li, Li+1, Li+2) durchläuft, die sich entlang einer Hauptrichtung Y, die eine Abszissenachse definiert, erstrecken und die ein Gitter bilden, das eine gewünschte Zone überdeckt, **dadurch gekennzeichnet, dass** es ein Verfahren zur Simulation der Positionierung eines Streamer-Schleppkabels nach einem der vorhergehenden Ansprüche einsetzt.

**19.** Verfahren zur Navigationshilfe nach dem vorhergehenden Anspruch, wobei das Schiff bereits eine Linie des Gitters durchlaufen hat, **dadurch gekennzeichnet, dass** das Verfahren das Bestimmen der Gesamtheit der Paare {Schiffsposition; Zeitpunkt} in regelmäßigen Raumintervallen umfasst, und dies derart, dass eine Strecke definiert wird, entlang der, bei gegebener Abszisse entlang der Hauptorientierung der Linien des Gitters, die Orientierung des Streamer-Schleppkabels (9210) so dicht wie möglich an der Orientierung eines zugehörigen Streamer-Schleppkabels (9200) in einer vorhergehenden Durchfahrt des Schiffes auf einer benachbarten Linie ist.

**20.** Verfahren zur Navigationshilfe nach Anspruch 18 oder 19, **dadurch gekennzeichnet, dass** das Verfahren die folgenden Schritte umfasst:

- Auswählen eines "Strömungsobjekts" eines angepassten Typs,
- Festlegen der Optimierungsparameter,
- Berechnen der Positionierung eines "Schleppkabel-Sollwerts" auf Basis der Daten in Bezug auf die Positionierung des Streamer-Schleppkabels im benachbarten Profil und der Optimierungsparameter,
- Berücksichtigen der Daten der Geschwindigkeit und der Richtung des Schiffes und der Daten der Positionierung des Streamer-Schleppkabels zum Zeitpunkt der Einleitung der Optimierungsberechnung,
- Erzeugen eines dreidimensionalen Optimierungsgitters, wobei eine erste Dimension (Y) parallel zur Hauptrichtung ist, eine zweite Richtung (X) senkrecht zur Hauptrichtung ist und in der horizontalen Ebene liegt, und die dritte Dimension (DT) die möglichen zeitlichen Inkremente zwischen zwei Knotenpunkten repräsentiert, die entlang der Hauptrichtung (Y) im Abstand von einer Gitterzelle liegen,
- Simulieren der Entwicklung der Positionierung des Streamer-Schleppkabels, das von einem Schiff geschleppt wird, das alle Strecken befährt, die von den Knotenpunkten des Optimierungsgitters festgelegt werden,
- Berechnen einer Norm des Abstands zwischen der simulierten Positionierung des Streamer-Schleppkabels und dem Sollwert der Positionierung des Streamer-Schleppkabels, und dies für alle in Betracht gezogenen Strecken,
- Berechnen einer optimalen Strecke, für die die zugehörige Norm minimal ist.

**21.** Verfahren zur Navigationshilfe nach dem vorhergehenden Anspruch, **dadurch gekennzeichnet, dass** der Optimierungsschritt das Minimieren einer Norm des Abstands zwischen dem Sollwert der Positionierung des Streamer-Schleppkabels und der simulierten Positionierung des Streamer-Schleppkabels umfasst.

**22.** Verfahren zur Navigationshilfe nach dem vorhergehenden Anspruch, **dadurch gekennzeichnet, dass** die zu minimierende Norm folgende Form hat:

$$H(X1, \delta t1) = \sum_{j=1}^{J} \sum_{k=1}^{K} \left| X_{sollwert}(k,j) - X_{vorhergesagt}(k,j) \right| f(k)$$

wobei,

- X1 eine Reihe von J aufeinanderfolgenden Werten der Position des Schleppkabelkopfs entlang der horizontalen Richtung des Optimierungsgitters, senkrecht zur Hauptrichtung, ist,
- $\delta t1$ eine Reihe von J aufeinanderfolgenden Werten der Zeitdauer ist, die der Schleppkabelkopf benötigt, um von einem Knotenpunkt des Optimierungsgitters mit den Koordinaten $(X_{i1}, Y_j, \delta t_{k1})$ zu einem Knotenpunkt mit den Koordinaten $(X_{i2}, Y_{j+1}, \delta t_{k2})$ zu kommen,
- J die Zahl der Knotenpunkte des Gitters in der Hauptrichtung (Y) ist,
- K die Zahl der Punkte der diskretisierten gekrümmten Abszisse des Streamer-Schleppkabels ist,
- $X_{sollwert}(k,j)$ die Position entlang der X-Achse des Punktes k des "Schleppkabel-Solwerts" ist, wenn der Kopf von diesem auf Höhe der j'ten Ebene des Optimierungsgitters entlang der Y-Achse ist,
- $X_{vorhergesagt}(k,j)$ die Position entlang der X-Achse des Punktes k des simulierten Schleppkabel ist, wenn der Kopf von diesem auf Höhe der j'ten Ebene des Optimierungsgitters entlang der Y-Achse ist,
- f(k) eine vorgegebene Gewichtungsfunktion für den Abstand zwischen dem simulierten Schleppkabel und dem Schleppkabel-Sollwert ist.

**23.** Verfahren zur Navigationshilfe nach einem der Ansprüche 21 oder 22, **dadurch gekennzeichnet, dass** das Verfahren ein Optimierungskriterium einsetzt, das aus einem Abstand zwischen gemessenen und vorhergesagten Daten zur Positionierung der Streamer-Schleppkabel abgeleitet ist.

**24.** Verfahren zur Navigationshilfe nach einem der Ansprüche 19 bis 23, **dadurch gekennzeichnet, dass** das der Schritt zur Optimierung der Zonenabdeckung derart in Echtzeit ausgeführt wird, dass für das Schiff eine Reihe von Triplets {Zeitpunkt; Schiffsposition; Geschwindigkeit des Schiffs} bereitgestellt wird, der zu folgen ist, um die Bahn des Schiffs auf einer Linie zu optimieren, die das Schiff gerade durchfährt.

**25.** Anwendung des Verfahrens zur Navigationshilfe nach einem der Ansprüche 19 bis 23 zum Bestimmen einer Bahn und einer Anfangszeit, die zu einer nächsten Linie gehören, die vom Schiff zu durchfahren ist, sowie der besten nächsten Linie, die auszuführen ist.

**26.** Anwendung nach dem vorhergehenden Anspruch, **dadurch gekennzeichnet, dass** innerhalb eines gegebenen zeitlichen Fensters eine Linienanfangszeit gesucht wird, die einer Minimierung der Unterabdeckung und der Überabdeckung entspricht.

**27.** Verfahren zur Vorhersage der Abdeckungsrate, die mit einer Operation zur Erfassung geophysikalischer Daten verbunden ist, die für eine Ausführung auf dem Meer in einer gegebenen Zone vorgesehen ist, **dadurch gekennzeichnet, dass** das Verfahren eine Streckensimulation für ein Schiff einsetzt, die ein Verfahren zur Navigationshilfe nach einem der Ansprüche 18 bis 23 umfasst.

S1

T

CMP

S2

Sa

FIG_1

FIG.2a

FIG.2b

FIG.2c

FIG.2d

FIG_3

EP 1 228 386 B1

54    55

51    52

53

10

FIG.4

920    9200

y

91

x

921    9210

FIG.8

**Prédiction à 1 heure avec Gauss**

08/08/98 00:00    09/08/98 00:00    10/08/98 00:00    11/08/98 00:00    12/08/98 00:00    13/08/98 00:00

**FIG_5a**

**Prédiction à 1 heure avec gradient conjugué**

08/08/98 00:00    09/08/98 00:00    10/08/98 00:00    11/08/98 00:00    12/08/98 00:00    13/08/98 00:00

**FIG_5b**

**Prédiction à 1 heure avec Gauss**

08/08/98 00:00    09/08/98 00:00    10/08/98 00:00    11/08/98 00:00    12/08/98 00:00    13/08/98 00:00

**FIG_5c**

**Prédiction à 1 heure avec gradient conjugué**

08/08/98 00:00    09/08/98 00:00    10/08/98 00:00    11/08/98 00:00    12/08/98 00:00    13/08/98 00:00

**FIG_5d**

Légende: —— prédictions ······ données

EP 1 228 386 B1

EP 1 228 386 B1

## FIG_6

```
                      702
        ┌─────────────────┐
        │ Courant de marée│
        │ de nt₀ à nt     │
        └────────┬────────┘
                 │
┌─────────────┐  +│  −         ┌──────────┐                    ┌──────────────┐
│ Mesures de  │   ▼            │ Courant  │   ┌───────────┐    │Courant résiduel│
│courant in situ├──⊗──────────▶│ résiduel │──▶│ Prédicteur│───▶│  à nt + To   │
│ de nt₀ à nt │   │            │de nt₀à nt│   │  linéaire │    └──────────────┘
└─────────────┘                └──────────┘   └───────────┘
     701         703              704            705              706
```

$$\text{Courant de marée de } nt_0 \text{ à } nt \quad (702)$$

| Mesures de courant in situ de $nt_0$ à $nt$ (701) | | Courant résiduel de $nt_0$ à $nt$ (704) | Prédicteur linéaire (705) | Courant résiduel à $nt + T_o$ (706) |

Courant de marée à $nt + T_o$ (708)

$+$ $+$ (707)

Courant total à $nt + T_o$ (709)

**FIG_6**

## FIG_7

Mesures de courant in situ (800)

Analyse harmonique (801) → Ondes de marée → Calcul du courant de marée (802)

$+$ $-$ ⊗ → Courant résiduel → Prédicteur linéaire → Prédiction du courant résiduel

Prédiction du courant de marée (808)

$+$ $+$ ⊗ → Prédiction du courant total

**FIG_7**

Numéro de pas de calcul

1    2        i                    N

(Xo, Yo)

## FIG_9

PXl

Ptl

## FIG_10

Critère    141

142    143

Temps de
départ

## FIG_13

121  122

123  124

S1  S2

S1  S2

## FIG_11

S13i+2

S13i+1

131

130

S13i

## FIG_12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P.M. KRAIL ; H. BRYSK.** The shape of a marine streamer in a cross current. *journal de la Society of Exploitation Geophysicists,* vol. 54 (3